# EUROPÄISCHE PATENTSCHRIFT

(11) **EP 4 628 650 B1**
(45) Veröffentlichungstag und Bekanntmachung des Hinweises auf die Patenterteilung: **02.12.2026**
(21) Anmeldenummer: 25000037.9
(22) Anmeldetag: 04.04.2025
(51) Int. Cl.: E01C 19/08, E01C 23/06, B60D 1/145

(54) **MOBILES, AN EIN FAHRZEUG KUPPELBARES AUSBRINGGERÄT MIT BEHEIZBARER FÖRDEREINRICHTUNG UND BETRIEBSVERFAHREN HIERZU**
MOBILE DELIVERY DEVICE WHICH CAN BE COUPLED TO A VEHICLE AND WHICH HAS A HEATABLE DELIVERY DEVICE, AND OPERATING METHOD THEREFOR
DISPOSITIF D'ÉPANDAGE MOBILE POUVANT ÊTRE COUPLÉ À UN VÉHICULE DOTÉ D'UN DISPOSITIF DE TRANSPORT POUVANT ÊTRE CHAUFFÉ ET PROCÉDÉ DE FONCTIONNEMENT ASSOCIÉ

(30) Priorität: 05.04.2024 DE 102024001092
(43) Veröffentlichungstag der Anmeldung: 08.10.2025
(73) Patentinhaber: Richard Rupprecht GmbH, 91233 Neunkirchen a.S. (DE); Linnhoff & Henne GmbH & Co. KG, 37627 Stadtoldendorf (DE)
(72) Erfinder: Rupprecht, Andreas, 91233 Neunkirchen a. S. (DE); Stahl, Henning, 37586 Dassel (DE)
(74) Vertreter: Dreykorn-Lindner, Werner

(56) Entgegenhaltungen:
- CN-A- 102 409 593
- DE-U1- 202005 020 178
- US-A1- 2011 000 761

## Beschreibung

Die Erfindung betrifft ein mobiles, an ein Fahrzeug kuppelbares Ausbringgerät mit beheizbarer Fördereinrichtung gemäß dem Patentanspruch 1 und ein Betriebsverfahren hierzu gemäß Patentanspruch 13.

Beim Straßenbau werden Straßen und Wege aus verschiedenen Materialien wie Asphalt, Beton, Pflaster, Großformate oder aus ungebundenem Material (beispielsweise Schotter) hergestellt (Deckschicht und Tragschicht). Die Herstellung erfolgt dabei bei größeren Baumaßnahmen mit einem Straßenfertiger bei Asphaltstraßen bzw. mit einem Betonfertiger bzw. Gleitschalungsfertiger bei Betonstraßen. Kleine Baumaßnahmen und Reparaturen werden oft manuell ausgeführt.

Wichtige Punkte beim Straßenbau sind:
- Wahl der eingesetzten Maschinen,
- Wahl des eingebauten Materials,
- Beachtung der Umweltbedingungen (Temperatur, Regen etc.),
- ausreichende Verdichtung bei der richtigen Asphalttemperatur.

Thermocontainer oder Mulden (meist halbrunder Boden) für den Transport von Heißasphalt sind seit langem bekannt. Bei handelsüblichen Thermocontainern aus dem Segment des Straßenbaus handelt es sich in der Regel um zylindrische oder kastenförmige Objekte, die zur Aufbewahrung von Heißasphalt dienen und durch eine Isolierung dazu beitragen, dass der Temperaturverlust des Asphalts während der Lagerung (z.B. während des Transports zur Baustelle) so gering wie möglich ausfällt. Üblicherweise wird Asphalt bis zu 12 Stunden auf Einbautemperatur und ohne zusätzliche Heizung gehalten. Zudem soll das Heißmischgut gegen Nässe, wie Regen oder Spritzwasser, geschützt werden. Weiterhin werden in der Regel Thermocontainer/- behälter auf dem Transportfahrzeug befestigt und durch Kippen der Ladefläche des Transportfahrzeugs so schräg gestellt, dass das Heißmischgut am mittigen Auslauf ausgekippt werden kann. Zur Verarbeitung ist es wichtig, dass das Mischgut auf dem Transport und beim Einbau keine Temperatur verliert, da sonst die Qualität im Einbau nicht gewährleistet ist.

Handelsübliche Thermocontainer mit Doppelauslauf kommen dabei meist im Reparaturbereich zum Einsatz, wenn kleinere Teilflächen oder Ausschnitte wieder hergestellt werden und dazu mit den unterschiedlichen Asphaltmischungen die Straße wieder aufgebaut werden muss. Stand der Technik ist dazu die Verwendung von Thermobehälter, die in der Ladekammer mit einem Trennblech geteilt sind und statt einem Auslauf, zwei nebeneinander angeordnete getrennte Ausläufe besitzen, jeweils eine für die getrennten Kammern. Stand der Fertigungstechnik ist es, dass die 2-Kammerausführung jeweils extra in der Ausführung gebaut werden müssen, dass bedeutet vor allem die Ausrüstung mit zwei nebeneinander liegenden Öffnungen und dazu zwei Verschlusssysteme und zwei Ablaufschurren.

Auch ist aus der DE29515998U1 ein Thermobehälter bekannt, bei dem der Auslauf vom Thermobehälter außermittig, vorzugsweise auf der rechten und/oder linken hinteren Seite angeordnet ist. Im Thermobehälter sind am Auslauf trichterförmige Zuführer eingeschweißt, welche das Heißmischgut zum Auslauf drückt. Schließlich weist der Thermobehälter noch jeweils zwei auf jeder Seitenwand angeordnete Befestigungslaschen zur Befestigung auf dem LKW auf.

Weiterhin ist aus der DE29716093U1 ein Thermobehälter mit einer eigenen Kippvorrichtung bekannt. Im Einzelnen wird hierzu ein Montagerohrrahmen auf der Ladefläche des Transportfahrzeugs montiert, auf dem Rahmen wird der Thermobehälter einseitig durch zwei Gelenke befestigt und eine ebenfalls auf dem Montagerohrrahmen angeordnete, mechanisch oder motorisch angetriebene Hebevorrichtung, welche durch eine Konsole mit dem Thermobehälter verbunden ist, bringt diesen zum Kippen. Risiken für den Anwender ergeben sich beim Auflegen/Abheben des Thermocontainers auf das/von dem Transportfahrzeug, dem Zuklappen des Deckels beim Befüllen des Thermocontainers oder dem Abladen des Werkzeugs vor dem Kippen des Thermocontainers. Im Straßenaufbau werden in der Körnung unterschiedliche Mischungen verwendet. Im Unterbau beispielsweise eine Asphaltragschicht mit 0,32 mm Korn und für die Oberfläche eine Asphaltdeckschicht mit 0,8 mm Korn. Die Schichten werden nacheinander eingebaut.

Weiterhin ist aus der DE202012104724U1 ein Abschiebewagen zum Transport von heißem Gut, insbesondere zum Transport von Asphalt, mit einer Mulde, die eine Entladeöffnung aufweist, sowie einer Austragseinrichtung zum Austrag des heißen Guts über die Entladeöffnung, bekannt. Die Mulde ist isoliert ausgebildet und um einen gleichmäßigen Austrag, insbesondere in eine Asphaltiermaschine hinein zu ermöglichen, umfasst die Austragseinrichtung eine in der Mulde angeordnete und in Richtung der Entladeöffnung verschiebbare Abschiebewand. Durch die Isolierung der Mulde wird ein frühzeitiges Abkühlen des heißen Asphalts, bevor der Asphalt in die Asphaltiermaschine gelangt, vermieden, sodass der Austrag von kalten Asphaltnestern in die Asphalttiermaschine und eine daraus resultierende mangelhafte Asphaltdecke, verhindert werden. Durch die Abschiebewand wird darüber hinaus ein gleichmäßiger Austrag des heißen Gutes gewährleistet. Bei der Austragseinrichtung ist somit ein Kippen der Mulde zum Austrag des Gutes nicht erforderlich, sodass auch der durch ein Kippen bedingte ungleichmäßige Austrag vermieden wird. Darüber hinaus kann der Abschiebewagen auch überall dort eingesetzt werden, wo die Höhe für einen Kippvorgang nicht zur Verfügung steht. Die Mulde wird vorzugsweise durch einen Muldenboden, zwei Seitenwände, eine im Bereich der Entladeöffnung angeordnete, vorzugsweise verschwenkbar ausgebildete Rückwand und die Abschiebewand begrenzt. Dabei können zumindest die Seitenwände, vorzugsweise aber auch der Boden, isoliert ausgebildet werden. Die Austrageinrichtung ist vorzugsweise 2-stufig ausgebildet, wobei eine erste Stufe durch einen Schiebeboden gebildet wird, der zusammen mit der Abschiebewand in Richtung der Entladeöffnung verschiebbar ist und die zweite Stufe durch die Abschiebewand gebildet wird, die relativ zum Schiebeboden verschiebbar ist. Auf diese Weise kann der Kraftaufwand für den Entladevorgang deutlich reduziert werden, weil der Reibwiderstand zwischen dem heißen Gut und dem Muldenboden um die anteilige Fläche des Schiebebodens reduziert wird. Die beiden Antriebe für Abschiebewand und Schiebeboden können jeder in geeigneter Art und Weise ausgebildet werden, wobei beispielsweise Hydraulikzylinder, eine mit einer Gewindespindel zusammenwirkende Laufmutter oder eine über ein Kettenrad angetriebene Rollkette zum Einsatz kommen können. Gemäß einer weiteren Ausgestaltung kann auch der Schiebeboden und/oder die Abschiebewand isoliert ausgebildet werden, so dass das heiße Gut auf dem Weg zur Entladestelle nur geringfügig sich abkühlt. Weiterhin kann die Abschiebewand mit vorgespannten Dichtklappen versehen sein, welche die beiden Spalte zwischen Abschiebewand und den Seitenwänden abdecken. In entsprechender Weise kann die Abschiebewand auch mit Dichtklappen versehen sein, die den Spalt zwischen Abschiebewand und dem Schiebeboden abdecken. Dadurch wird verhindert, dass etwaiges Gut in den Spalt zwischen Abschiebewand und der jeweiligen Seitenwand gelangt. Weiterhin kann auch der Schiebeboden an einer der Entladeöffnung zugewandten Vorderkante Dichtklappen aufweisen, die den Spalt zwischen der V/orderkante des Schiebebodens und dem Muldenboden abdecken. Dabei kann jeder Spalt mit einer Vielzahl von nebeneinander angeordneten Dichtklappen abgedeckt sein, wobei jede Dichtklappe mit einem zugeordneten Federelement in eine Dichtstellung vorgespannt wird.

In der Praxis kommt es häufig vor, dass mit ein und demselben Straßenfertiger Deckbeziehungsweise Tragschichten unterschiedlicher Breite eingebaut werden sollen. Zum einen kann die Einbaubreite des Straßenfertigers erhöht werden, indem an den quer zur Arbeitsrichtung liegenden Enden der Bohle weitere Anbausegmente oder Anbaubohlen montiert werden, über die sämtliche Einrichtungen der Bohle, also sowohl die Transporteinrichtung für das Einbaumaterial, als auch eventuelle Vibrations- oder Stampfleisten, verlängert werden. Die Einbaubreite des Straßenfertigers beziehungsweise der Einbaubohle verlängert sich dabei fix schrittweise um die Breite des Anbauelementes. Eine weitere Möglichkeit, die Einbaubreite des Straßenfertigers zu variieren, besteht darin, an den quer zur Arbeitsrichtung seitlich außenliegenden Enden der Bohle hydraulisch angetriebene Ausziehbohlen vorzusehen, die entweder durch den Fahrer des Straßenfertigers oder durch an der Seite der Bohle stehende Bediener quer zur Arbeitsrichtung des Straßenfertigers relativ zur Bohle ein- oder ausgefahren werden können. Mithilfe dieser zumeist hydraulisch betriebenen Ausziehbohlen kann die Einbaubreite des Straßenfertigers beispielsweise kontinuierlich innerhalb eines festgelegten Bereiches variiert werden, wodurch auch sich verengende oder verbreiternde Abschnitte einer Tragschicht eingebaut werden können. Um bei mit ausschließlich Starrbohlen ausgestatteten Straßenfertigern auf einfache Weise und ohne erheblichen Umbauaufwand eine variable Breitenverstellung, wenn erforderlich, zu erhalten ist aus der DE102015 006250B4 eine Anbaubohleneinheit für den Anbau an eine Bohleneinheit eines Straßenfertigers bekannt, welche dazu eine Verbindungsbohle, wenigstens eine verstellbar an der Verbindungsbohle gelagerte Verstellbohle, die zwischen einer eingefahrenen Position und einer ausgefahrenen Position gegenüber der Verbindungsbohle verstellbar ist, wodurch die Einbaubreite der Anbaubohleneinheit variabel ist, und eine hydraulische Verstelleinrichtung, die in der Weise ausgebildet ist, dass sie die wenigstens eine Verstellbohle zwischen der eingefahrenen Position und der ausgefahrenen Position, idealerweise stufenlos, verstellen kann umfasst. Die Verstelleinrichtung weist ein an der Anbaubohleneinheit angeordnetes Elektro-Hydraulikaggregat auf, das einen elektrischen Anschluss umfasst, über den das Elektro-Hydraulikaggregat mit elektrischer Energie versorgt werden kann, und wobei das Elektro Hydraulikaggregat einen eigenständigen Hydraulikkreislauf mit wenigstens einer elektrisch angetriebenen Hydraulikpumpe und einem von der Hydraulikpumpe angetriebenen hydraulischen Aktor aufweist. Die Anbaubohleneinheit gemäß der DE102015006250B4 umfasst somit immer zwei einzelne Bohlenelemente, die neben den reinen Bohlenfunktionen für den Einbauprozess weitere Funktionen haben. Die Verbindungsbohle stellt zunächst dasjenige Bohlenelement dar, über das die erfindungsgemäße Bohleneinheit nicht direkt am Traktor des Straßenfertigers (auch nicht über entsprechende Haltearme) angelenkt ist, sondern über das es stets an einer Bohle, insbesondere einer Starrbohle, des Straßenfertigers gelagert bzw. befestigt ist. Andererseits ist die Verbindungsbohle auch das Tragelement für die Verstellbohle. Die Verstellbohle ist somit an der Verbindungsbohle verstellbar, insbesondere verschiebbar, gelagert in der Weise, dass die Gesamtarbeitsbreite der Anbaubohle in einem festgelegten Bereich (je nach Ausführungsform, grundsätzlich aber höchstens von maximal der Breite der Verbindungsbohle und der Verstellbohle bis minimal der Breite der jeweils breiteren Verstellbohle oder Verbindungsbohle) verstellbar ist. Die Anbaubohleneinheit weist eine Bedienungseinrichtung auf, über die ein Bediener die Einbaubreite der Anbaubohleneinheit, optimalerweise direkt an der Anbaubohleneinheit selbst, einstellen kann. Die Bedienungseinrichtung ist beispielsweise ein Steuerungspaneel, auf dem sich Steuerungselemente befinden. Zur Versorgung der Bedienungseinrichtung mit elektrischer Energie greift diese bevorzugt auf dieselbe Energiequelle zurück wie die Verstelleinrichtung, also beispielsweise auf eine an der Anbaubohleneinheit angeordnete Batterie. Grundsätzlich kann die Anbaueinrichtung beispielsweise vorstehende Fixierbolzen und/oder Öffnungen zur Aufnahme von Schraubverbindungen und/oder entsprechenden Fixierbolzen umfassen. Bevorzugt ist die ergänzende oder alternative Verwendung einer Anhängevorrichtung, nämlich mit wenigstens einem über die Stirnseite der Montageseite der Anbaubohleneinheit vorspringenden Eingriffhaken. Der Eingriffhaken ist dabei zur Einfädelung und zum Hintergriff der an dem Straßenfertiger angeordneten Bohle, insbesondere einer Starrbohle ausgebildet. Dadurch kann die Montage erheblich erleichtert und die Montagezeit kurz gehalten werden. Ideal ist es somit, wenn die Befestigungseinrichtung Teil einer mechanisch betätigbaren Schnellverbindung ist, beispielsweise einer Rast- oder Schnappverbindung, die im besten Fall völlig ohne externe Werkzeuge geschlossen und geöffnet werden kann.

Um eine preiswerte Transporteinrichtung für eine Fräseinheit zur Verfügung zu stellen, mit welcher einerseits die Fräseinheit zwischen verschiedenen Orten transportiert, andererseits gleichzeitig der Montageprozess und insbesondere die Vorpositionierung der Transporteinrichtung zur Straßenfräse erleichtert werden kann ist eine Lösung aus der DE102015016672A1 bekannt. Hierzu ist vorgesehen, dass die Transporteinrichtung einen Tragrahmen umfasst, der insbesondere die Bodenstruktur der Transporteinrichtung bildet. Der Tragrahmen ist entsprechend stabil und möglichst flach ausgebildet. Die Transporteinrichtung umfasst weiter einen Aufnahmeschlitten für die Fräseinheit, wobei der Aufnahmeschlitten auf dem Tragrahmen, insbesondere in der Horizontalebene, verfahrbar angeordnet ist. Mit dem Aufnahmeschlitten wird somit zunächst eine Einheit zur Verfügung gestellt, die zur Lagerung der Fräseinheit auf der Transporteinrichtung vorgesehen ist. Mit dem Aufnahmeschlitten kann die Fräseinheit gleichzeitig relativ zum Tragrahmen auf der Transporteinrichtung bewegt bzw. verfahren werden. Die Transporteinrichtung bringt somit bereits selbst die Eignung mit, mithilfe des Aufnahmeschlittens die Fräseinheit in verschiedene Relativpositionen zur durch den Tragrahmen gebildeten Basisstruktur zu bewegen. Dies betrifft insbesondere Bewegungen des Aufnahmeschlittens in der Horizontalebene, bei auf dem Bodenuntergrund abgesetzter Transporteinrichtung. Weiterhin ist auch vorgesehen, dass die Transporteinrichtung eine Transportfahrzeugaufnahme zur Ankopplung an ein Aufnahmefahrzeug, insbesondere ein sogenanntes Wechselladerfahrzeug oder Hakenliftfahrzeug, aufweist. Die Transportfahrzeugaufnahme bezeichnet somit eine Einrichtung, an die ein Aufnahmefahrzeug, mit dem die Transporteinrichtung als Ganzes transportiert wird, ankoppelt, um die Transporteinrichtung von dem Aufnahmefahrzeug abzuladen und/oder aufzuladen. Derartige Fahrzeuge sind grundsätzlich bekannt und finden häufig zur Verladung von sogenannten Abrollkippermulden oder ähnlichen Einrichtungen Verwendung.

Weiterhin sind aus der DE102017005013A1 ein Straßenfertiger oder Beschicker und eine Anfahrleithilfe für einen derartigen Straßenfertiger oder Beschicker bekannt. Hierzu ist im quer zur Arbeitsrichtung außenliegenden Randbereich eines Materialbunkers wenigstens eine in Arbeitsrichtung über einen Bunkerboden und die Seitenwände entgegen der Einbaurichtung in einer Leitposition überstehende Anfahrleithilfe am Straßenfertiger oder Beschicker angeordnet. Die Anfahrleithilfe ist aus der Leitposition heraus wenigstens teilweise nach außen zerstörungsfrei in eine Ausweichposition verstellbar. Der quer zur Arbeitsrichtung ausgewiesene Randbereich des Materialbunkers erstreckt sich beispielsweise über ein Drittel, insbesondere ein Viertel, und bevorzugt über ein Fünftel, der Vorderseite des Materialbunkers. Diese Angaben können sich sowohl auf einen quer zur Arbeitsrichtung ausgefahrenen sowie auf einen quer zur Arbeitsrichtung eingefahrenen Materialbunker beziehen und betreffen bevorzugt einen quer zur Arbeitsrichtung ausgefahrenen Materialbunker, da sich der Materialbunker während des Überladevorganges von Einbaugut von einem Transportfahrzeug in den Materialbunker typischerweise in der ausgefahrenen Position befindet. Die Anfahrleithilfe ist quer zur Arbeitsrichtung des Straßenfertigers oder Beschickers neben der Anfahrzone für das Transportfahrzeug angeordnet und befindet sich also unmittelbar oder wenig beabstandet von der Anfahrzone für das Transportfahrzeug quer zur Arbeitsrichtung nach außen versetzt am Straßenfertiger oder Beschicker. Sie ist derart am in Arbeitsrichtung vorderen Ende des Straßenfertigers oder des Beschickers angeordnet, dass sie in Arbeitsrichtung nach vorne über den Straßenfertiger oder Beschicker hervorragt. Diese Ausgangsposition der Anfahrleithilfe wird als Leitposition bezeichnet. In der Ausgangsposition steht die Anfahrleithilfe bevorzugt maximal in Einbaurichtung vom übrigen Fertiger vor. Jede Bewegung der Anfahrleithilfe oder Teilen davon resultiert somit darin, dass sich die Anfahrleithilfe oder zumindest Teile davon zumindest teilweise entgegen der Einbaurichtung verstellt. Die Anfahrleithilfe erstreckt sich somit weiter in Arbeitsrichtung nach vorne als jegliche anderen Teile des Straßenfertigers oder Beschickers. Insbesondere erstreckt sich die Anfahrleithilfe weiter in Einbau- bzw. Arbeitsrichtung nach vorne als die Seitenwände des Materialbunkers, die teilweise ihrerseits ebenfalls in Arbeitsrichtung über weitere Teile des Straßenfertigers oder Beschickers überstehen können. Die Anfahrleithilfe ist nun allerdings derjenige Teil des Straßenfertigers oder Beschickers, der sich am Weitesten in Arbeitsrichtung nach vorne erstreckt und insbesondere auch die Seitenwände in Arbeitsrichtung überragt. Dabei kommt der Anfahrleithilfe insbesondere keine Materialleit- und/oder Rückhaltefunktion zu. Die Anfahrleithilfe dient vielmehr ausdrücklich und insbesondere ausschließlich dazu, die Orientierung eines Fahrer eines Transportfahrzeuges für Einbaugut beim Anfahren des Straßenfertigers oder Beschickers zu erleichtern. Auf diese Weise bietet die Anfahrleithilfe dem Fahrer eines Transportfahrzeuges eine optische Stütze, an der er sich beim Heranfahren an den Materialbunker mit dem Heck des Transportfahrzeuges orientieren kann. Darüber hinaus dient die Anfahrleithilfe ebenfalls als Warnung für den Fahrer des Transportfahrzeuges, wenn sich eine Kollision zwischen dem Heck des Transportfahrzeuges und der Anfahrleithilfe anbahnt. Sollte dies passieren, so weiß der Fahrer des Transportfahrzeuges frühzeitig, dass er die Anfahrzone verfehlt hat und die Position seines Fahrzeuges korrigieren muss. Gleichzeitig wird durch die Vorlagerung der Anfahrleithilfe vor das in Arbeitsrichtung vordere Ende des Straßenfertigers oder Beschickers sichergestellt, dass es immer erst zu einer Kollision der Anfahrleithilfe mit dem Heck des Transportfahrzeuges kommt, bevor das Heck des Transportfahrzeuges mit den Seitenwänden des Materialbunkers in Kontakt treten bzw. kollidieren kann. Eine Beschädigung der Seitenwände des Materialbunkers wird auf diese Weise effizient vermieden. Die Anfahrleithilfe wird somit gezielt in einem potentiell beträchtlichen Kollisionsbereich platziert, so dass es in der Praxis häufig vorkommt, dass Kollisionen zwischen zumindest Teilen der Anfahrleithilfe und einem Transportfahrzeug kommen kann. Diesem Umstand wird in der Weise sinnvoll begegnet, dass die Anfahrleithilfe derart ausgebildet ist, dass sie aus der Leitposition heraus nach außen zerstörungsfrei in eine Ausweichposition oder einen Ausweichbereich verstellbar ist. Aus der Leitposition heraus bewegt sich die Anfahrleithilfe dabei zumindest teilweise vom Bunkerinnenraum weg. Schließlich können auch zwei Anfahrleithilfen vorhanden sein, die quer zur Arbeitsrichtung voneinander beabstandet angeordnet sind. Die Anfahrleithilfen sind insbesondere identisch ausgebildet und/oder zur Maschinenmitte hin gespiegelt ausgebildet. Insbesondere schließen die beiden Anfahrleithilfen quer zur Arbeitsrichtung gesehen die Anfahrzone für das Transportfahrzeug zwischen sich ein. Auf diese Weise wird die Anfahrzone auf beiden Seiten durch eine Anfahrleithilfe angezeigt, wodurch der Fahrer des Transportfahrzeuges besonders präzise zum Überladevorgang an den Straßenfertiger oder Beschicker heranfahren kann.

Weiterhin ist aus dem DE202013103654U1 ein Transportfahrzeug zum Aufnehmen und Absetzen eines Behälters, insbesondere eines Wechselcontainers bekannt. Das Transportfahrzeug weist einen auf einem Fahrzeugrahmen angeordneten Kipprahmen auf, der um eine quer zur Fahrzeuglängsachse verlaufende und am Heck des Fahrzeugrahmens angeordnete erste Kippachse schwenkbar ist und sieht einen längs des Kipprahmens verschiebbaren Schlitten vor, wobei der Schlitten wenigstens ein Kopplungselement zum Erfassen des Behälters aufweist. Der Kipprahmen ist weiterhin um wenigstens eine parallel zur Fahrzeugachse ausgerichtete zweite Kippachse schwenkbar. Der Kipprahmen kann beim Aufnehmen und Absetzen des Behälters gekippt werden, sodass sich die Aufsetzhöhe verringert. Außerdem wird weniger Kraft benötigt, um den Behälter auf die niedrigere Aufsetzhöhe anzuheben und anschließend durch den Schlitten bei leicht gekipptem Kipprahmen aufzuziehen. Außerdem passt sich der Kipprahmen dem Winkel des Behälters an und muss nicht wie bei normalen Hakenliftrahmen über den Drehpunkt aufgezogen werden. Dadurch ist auch ein deutlich verringerter Kraftbedarf erforderlich. Weiterhin ergibt sich eine geringere Gesamthöhe beim Aufnehmen des Behälters, da der Behälter direkt auf den Kipprahmen gezogen wird und der Kipprahmen in der Zeit des Aufziehens abgesenkt wird. Die geringere Aufsetzhöhe verhindert, dass ein Teil der Ladung beim Aufnehmen bzw. Absetzen über die Rückwand des Behälters verloren wird. Gefüllte Behälter können somit einfacher auf das Fahrzeug gezogen werden. Da der Schlitten mit dem Kopplungselement auch in der Aufnahmephase auf dem Kipprahmen verschoben werden kann, ist es möglich, das Gewicht des Behälters näher an die Fahrzeugachse heranzuziehen. Dies ermöglicht wiederum einen beladenen Behälter aufzunehmen ohne die Stützlast komplett zu verlieren, was bei normalen Hakenliftrahmen ohne Kippfunktion kaum bzw. nicht denkbar ist. Da der Kipprahmen weiterhin um wenigstens eine parallel zur Fahrzeugachse ausgerichtete zweite Kippachse schwenkbar ist, kann der Behälter nicht nur nach hinten, wie bei normalen Containerfahrzeugen, sondern auch zu wenigstens einer Seite entladen werden. Dadurch können eine Vielzahl von neuen Einsatzgebieten für das neue Transportfahrzeug verwirklicht werden. Der Schlitten kann längs des Kipprahmens mittels Kettenzug, Hydraulikzylinder oder Spindelantrieb oder einer Kombination dieser Elemente verschoben werden, wobei eine Gleitleistenführung oder eine Rollenführung zur Führung des Schlittens am Kipprahmen denkbar ist. Der Kipprahmen ist vorzugsweise im Bereich der ersten, zweiten und dritten Kippachse mittels Klauen- und Pfannenlagerung gelagert, die ein Schwenken des Kipprahmens sowohl um die erste als auch um die zweite und dritte Kippachse erlaubt. Weiterhin kann der Kipprahmen an seinem hinteren Ende mit Rollen ausgestattet sein, auf denen sich der Behälter beim Aufnehmen bzw. Absetzen des Behälters abstützt.

Weiterhin ist aus der DE202008001207U1 ein Anhänger für Ladegut mit einer Entladeöffnung, eine Vorrichtung zum Entladen sowie einem im Bereich der Entladeöffnung vorgesehenen Ladegutverteiler für das Einlagern von Silagegut in Silos bekannt. Der Anhänger weist eine Entladeöffnung auf, wobei der Ladegutverteiler durch einen hin und herschwenkbaren Verteilerarm gebildet wird. Durch die Schwenkbewegung des Ladegutverteilers wird das Ladegut besser zu den Seiten verteilt, so dass sich die gewünschte flache Querverteilung ergibt. Der Verteilerarm ist vorzugsweise mittig unterhalb des Bodens des Anhängers angebracht und ist in seiner Länge einstellbar. Die Länge wirkt sich dabei unmittelbar auch auf die entstehende Breite des Ablageberges aus. Die Verstellbarkeit kann beispielsweise durch eine teleskopartige Ausbildung des Verteilerarms erreicht werden. Im Einzelnen ist der Verteilerarm unterhalb des Bodens etwa mittig angeordnet und erstreckt sich vom Anhänger nach hinten weg. Wenn der Verteilerarm nicht benötigt wird, kann dieser unter den Boden eingeschwenkt oder eingefahren werden kann. Der Verteilerarm ist dabei beispielsweise mit seinem einen Ende schwenkbeweglich am Anhänger gehaltert. Weiterhin kann das andere Ende des Verteilerarms zudem in seiner Höhe eingestellt werden. So ist es beispielsweise denkbar, dass der Verteilerarm etwa parallel zum Untergrund oder vom Anhänger schräg nach unten eingestellt wird. Durch die Einstellung der Länge des Verteilerarmes, der Höhe des abstehenden Endes des Verteilerarmes und der Geschwindigkeit der Schwenkbewegung kann die Wirkung des Verteilerarmes gezielt auf das Ladegut und die gewünschte Querverteilung eingestellt werden.

Weiterhin ist aus der US2011/0000761A1 ein Nachladeförderer (auch Umladeförderer genannt) bekannt, welcher Materialien von einem Transportfahrzeug empfängt und diese Materialien in einen Materialempfänger einer Streuvorrichtung überträgt. Um zu vermeiden, dass der Umladeförderer on der Transportkonfiguration sehr lang wird, umfasst der Nachladeförderer einen Gelenkfördererrahmen und einen Materialaufnahmemechanismus. Der Gelenkfördererrahmen ist so konfiguriert, dass er durch Gelenke eine Transportkonfiguration und eine Materialtransferkonfiguration annehmen kann, wobei die Gesamtlänge des Nachladeförderers in der Transportkonfiguration wesentlich kürzer ist als in der Transferkonfiguration. Der Materialaufnahmemechanismus ist außerdem so konfiguriert und angeordnet, dass er eine Transferkonfiguration und eine Transportkonfiguration annehmen kann, wobei die Breite des Materialaufnahmemechanismus in der Transportkonfiguration wesentlich geringer ist als in der Transferkonfiguration. Der Nachladeförderer umfasst einen Anhänger, welcher so konfiguriert ist, dass er einen Rahmen mit mehreren Rädern und eine Anhängerkupplungsanordnung umfasst. Die Anhängerkupplungsanordnung ist zum Ankuppeln des Umladeförderers an ein Transportfahrzeug für den Transport zu und von einer Baustelle konfiguriert. Weiterhin ist in der US2011/0000761A1 eine Kombination aus Nachladeförderer (Umladeförderer) und selbstfahrendem Streuer beschrieben, bestehend aus dem Nachladeförderer mit einem Förderrahmen, der gelenkig in eine Transport- und eine Materialübergabekonfiguration schwenkbar ist, wobei die Gesamtlänge des Nachladeförderers in der Transportkonfiguration wesentlich kürzer ist als in der Übergabekonfiguration, und einem Materialaufnahmemechanismus, wobei diese in der Transportkonfiguration wesentlich schmaler ist als in der Übergabekonfiguration. Weiterhin weist der Anhänger eine austauschbare Anhängerkupplung auf, welche am Ladeende des Förderrahmens um eine Schwenkachse schwenkbar montiert ist. Die Kombination aus Umladeförderer und Streuer ist derart ausgestaltet, dass der Streuer den Umladeförderer zieht oder der Streuer den Umladeförderer schiebt. Bei der Ausgestaltung des Umladeförderers als Förderband ist erwähnt, dass Stifte aus der Anhängerkupplungsanordnung entfernt werden können, um Rahmenelemente der Anhängerkupplung in Positionen zu schwenken, in welchen diese Lieferfahrzeuge beim Entladen ihrer Materialladungen in einen Trichter nicht behindern.

Weiterhin ist aus der DE29519719U1 eine Vorrichtung zum Einbauen von Straßenbelag-Schichten aus einer ersten und einer zweiten Einbaugutsorte bekannt. Derartige Vorrichtungen werden verwendet, wenn Straßendecken in zweischichtigem Einbau hergestellt werden. Bei der Vorrichtung gemäß der DE29519719U1 versorgt ein und derselbe Beschicker den Straßenfertiger mit den beiden Gutbunkern oder die beiden Straßenfertiger mit jeweils einem Gutbunker abwechselnd mit den ersten und zweiten Einbaugutsorten. Es ist kein zweiter Beschicker für diesen Zweck erforderlich. Es kann der die beiden Gutbunker aufweisende Straßenfertiger bzw. es können beide Straßenfertiger kontinuierlich arbeiten, da trotz intermittierender Anlieferung der beiden Einbaugutsorten der Beschicker die für das kontinuierliche Einbauen erforderliche Versorgung gewährleistet. Die eine Einbaugutsorte wird in den Schüttbunker des Beschickers gefüllt. Die andere Einbaugutsorte wird hingegen von der zweiten Längsförder- und Zwischenspeicher-Vorrichtung am Beschicker übernommen, die auf dem ersten Fertiger abgestützt wird. Durch die Aufnahmekapazität des Beschickers für die beiden Einbaugutsorten wird trotz der intermittierenden Anlieferung der Einbaugutsorten eine ausreichende Versorgung des Straßenfertigers bzw. der Straßenfertiger zu jedem Zeitpunkt sichergestellt. Im Detail ist ein sich oberhalb des Schüttbunkers und einer ersten Längsfördervorrichtung erstreckender Überbau vorgesehen. Auf dem Überbau an den vorne liegenden Teilabschnitt der Längsförder- und Zwischenspeicher-Vorrichtung des Beschickers schließt sich ein horizontales Förderband oder ein Kratzförderer an. Das Förderband oder der Kratzförderer ist nach oben abgedeckt und mit einer Heizvorrichtung mit elektrischen oder gasbetriebenen Heizeinrichtungen versehen.

Weiterhin ist aus der DE1916057A eine Vorrichtung zum Streuen bzw. Verteilen von Gut über eine große Fläche hinweg bekannt. Die Vorrichtung zum Streuen von Kies, Asphalt und dgl. Schüttgut über eine große Fläche hinweg ist gekennzeichnet durch eine Gut-Fördereinheit mit einem Förder-Schacht, der kontinuierlich mit dem Gut beschickbar ist und in welchem eine Förderschnecke parallel zum Förder-Schacht drehbar gelagert ist, so dass das zu verteilende Gut in eine am einen Ende des Förder-Schachts vorgesehene Streueinrichtung gefördert wird. Weiterhin ist ein mit der Förderschnecke verbundener und diese in Drehung versetzender Antriebs-Motor vorgesehen. Eine über die mit dem Gut zu bedeckende Fläche bewegbare Antriebs- und Trageinheit weist eine Führung auf, in oder auf welcher die Fördereinheit in Längsrichtung verschiebbar ist. Schließlich ist eine mit der Fördereinheit verbundene Antriebseinrichtung zur Hervorbringung einer Hin- und Her-Bewegung derselben längs der Führung vorgesehen. Wenn Materialien wie Asphaltverbindungen für Straßen- und Gehwegbau gestreut werden sollen, können bei der Förderung des Guts im Förder-Schacht häufig Schwierigkeiten dadurch auftreten, dass das betreffende Gut zu kalt ist. Eine Möglichkeit zur Lösung dieser Schwierigkeit besteht in der Verwendung einer Heizeinrichtung, beispielsweise eines Flüssiggas-Brenners. Wenn der Schacht und der darin befindliche Asphalt bei der Hin- und Her-Bewegung vor einem Brenner vorbeilaufen, wird der Asphalt erwärmt, so daß dieser leicht zu einem Streu-Kasten gefördert werden kann.

Schließlich ist aus dem DE202005021591U1 ein fahrbarer Gurtbandförderer für Baustellen zum Fördern von Schütt- und Stückgut bekannt, welcher einen Grundrahmen und wenigstens eine in demselben teleskopartig verfahrbar gelagerten Teleskopsektion sowie eine über Führungs- und Umlenkrollen des Grundrahmens und der wenigstens einen Teleskopsektion geführten endlosen Gurtband aufweist. Weiterhin ist der Grundrahmen von einem auf einem Fahrgestell um eine zu demselben vertikale Drehachse drehbar gelagerten Drehtisch getragen und um eine horizontale Drehachse schwenkbar gelagert. Bei dem Gurtbandförderer gemäß der DE202005021591U1 ist der Grundrahmen mittels zumindest einer, vorzugsweise einer Mehrzahl von Spannvorrichtungen fest jedoch lösbar mit dem Drehtisch des Fahrgestells verbunden. Dem Grundrahmen und/oder der wenigstens einen Teleskopsektion sind eine Mehrzahl von Stützelementen zugeordnet, die ihrerseits in einem vom Fahrgestell gelösten respektive separierten Zustand des Gurtbandförderers eine statisch bestimmte Anordnung desselben auf einem Planum gestatten. Die Stützelemente sind von einer weitestgehend zum Grundrahmen und/oder der wenigstens einen Teleskopsektion parallelen Ruhestellung in eine weitestgehend vertikale Arbeitsstellung durch Verschwenken derselben überführbar und in dieser Position fixierbar.

**Weiterhin ist aus der** CN 102 409 593 A **ein von einem Zugfahrzeug gezogener Asphaltverteiler mit Lenkgetriebe und Bremsvorrichtung bekannt. Um einen Reifenverschleiß aufgrund einer unflexiblen Lenkung und einem Ausfall der Bremse während der Fahrt zu verringern, weist der Asphaltverteiler gemäß der** CN 102 409 593 A **ein Fahrgestell und darunter angeordnete Räder auf, wobei an einem Ende des Fahrgestells sich eine Sprühvorrichtung befindet, die mit dem Fahrgestell und einem Asphaltvorratsbehälter auf dem Fahrgestell verbunden ist. Am anderen Ende des Fahrgestells ist eine Anhängerkupplung angeordnet. Die Lenkeinrichtung besteht aus einem Schwenkarm, dessen vorderes Ende drehbar mit der Anhängerkupplung und dessen hinteres Ende drehbar mit dem Fahrgestell verbunden ist. Oberhalb des Fahrgestells und des Schwenkarms befindet sich ein Viergelenkmechanismus, der die Räder des Fahrgestells über diesen Mechanismus synchron zum Zugfahrzeug lenkt. Die flexible Lenkung des Asphaltverteilers reduziert den Reifenverschleiß und verlängert die Reifenlebensdauer. Oberhalb des Schwenkarms ist eine hydraulische Bremsvorrichtung angeordnet. Beim Bremsen des Zugfahrzeugs gleitet die hydraulische Bremsvorrichtung durch den Schwenkarm trägheitsbedingt nach vorn. Der Bremshebel drückt den Kolben der hydraulischen Bremsvorrichtung nach hinten und bremst so, wodurch ein gleichzeitiges und automatisches synchrones Bremsen mit dem Zugfahrzeug ermöglicht wird.**

**Schließlich ist aus der** DE 20 2005 020 178 U1 **eine Austragvorrichtung für Gussasphalt o.dgl. Baustoffe bekannt. Die Austragvorrichtung weist eine wärmeisolierte und an beheizbare Leitungen angeschlossene Pumpe auf, mit der der Gussasphalt in erwärmtem Zustand zu einem Ausbringort förderbar ist. Im Einzelnen bildet die Austragvorrichtung eine auf einem Fahrgestell befindliche und mit einem Dieselmotor als Antriebsaggregat versehene Baueinheit, mit welcher der Gussasphalt automatisch ausbringbar ist. Die Baueinheit kann dabei als Teil einer mittels des** Fahrgestells verlagerbaren Transportbaugruppe oder als ein auf einem Lastkraftwagen montierbares Wechselsystem ausgebildet sein. Die nach Art eines Anhängers mitführbare Transportbaugruppe weist dabei mit dem als Antriebsaggregat vorgesehenen Dieselmotor eine Basisbaugruppe auf, mit der zusätzlich zur Beheizung und dem Antrieb der Förderpumpe weitere Hilfsenergien erzeugbar und zur Steuerung und Handhabung des Systems nutzbar sind. Die anwendungsgerechte Positionierung der Austragvorrichtung, das regelbare Ausbringen des Gussasphalts, die Beheizung des Pump- und Fördersystems und ein nach dem Ausbringen des Gussasphalts notwendiger Reinigungszyklus im Bereich von Ausbringleitungen sind mit geringem Aufwand weitgehend automatisch durchführbar. Die Förderpumpe ist im Nahbereich einer innenliegenden Förderschnecke mit einem Temperatursensor versehen, mit dem die Zufuhr von Heizenergie in den Bereich der isolierten Förderpumpe insbesondere so regelbar ist, dass der bis auf 220° C bis 250° C, vorzugsweise auf 240° C, aufgeheizte Gussasphalt in optimaler Konsistenz ausgefördert werden kann. Die beheizbaren und isolierten Leitungen mit bis zu 20m sind über Schnellkupplungen an die Austragvorrichtung anschließbar. Die Förderpumpe ist gemeinsam mit einer dieser in Form eines Trichters zugeordneten Füllvorrichtung über eine Stützkonstruktion so am Fahrgestell festgelegt, dass mittels hydraulischer, pneumatischer oder elektrischer Stellglieder eine Höhen- oder Querverstellung möglich ist. Der Einfülltrichter ist zusätzlich von Hand oder mittels eines Antriebsorgans in die jeweilige Füllstellungen verschwenkbar. Für den Transport der Baueinheit B zu einem neuen Arbeitsort ist der Trichter in seine Nichtgebrauchsstellung rückschwenkbar und durch Haltemittel arretierbar.

Wie die vorstehende Würdigung des Standes der Technik aufzeigt, sind unterschiedliche ausgestaltete Fahrzeuge für den Transport oder Austrag von Schüttgut einschließlich der Verteilung des Ladeguts über unterschiedliche Breite bekannt. Dabei ergeben sich jedoch spezielle Randbedingungen aus dem auszutragenden Schüttgut. Insbesondere, ob es sich um den Transport und Austrag von Heißasphalt oder Silage oder ähnlichem handelt. Jedoch fehlt in der Praxis ein kostengünstiges mobiles Ausbringgerät, welches gleichermaßen für kleinere bis große Baumaßnahmen, insbesondere Asphaltieren von unregelmäßig geformten Flächen geeignet ist. Dabei soll ein zügiger Arbeitsablauf beim Asphaltieren von großen Flächen mit weniger Personal und eine Reduzierung der Standzeiten gewährleistet sein. Demgemäß fehlt ein kostengünstiges, einfach zu handhabendes Ausbringgerät, wobei dieses einen gleichmäßigen Fluss von Schüttgut annähernd gleicher Temperatur ermöglichen und ein Sicherheitsrisiko für den Anwender zuverlässig vermeiden soll. Besonders bedeutsam ist dies, weil die Straßenbaumaschinenindustrie als fortschrittliche, entwicklungsfreudige Industrie anzusehen ist, die schnell Verbesserungen und Vereinfachungen aufgreift und in die Tat umsetzt.

Der Erfindung liegt die Aufgabe zugrunde, ein Ausbringgerät mit einer Verteilvorrichtung derart auszugestalten, dass dieses einen zügigen Arbeitsablauf und einen gleichmäßigen Fluss von Schüttgut mit annähernd gleicher Temperatur ermöglicht und ein Sicherheitsrisiko für den Anwender zuverlässig vermeidet.

Diese Aufgabe wird, gemäß Patentanspruch 1, durch ein Ausbringgerät gelöst, welches aufweist:
- einen Fahrzeuganhänger, welcher ein Fahrgestell mit einem zweiteiligen Fahrzeugrahmen aus einem vorderen Rahmenteil und einem hinterem Rahmenteil aufweist,
- eine Befestigungsvorrichtung zur kraft- oder formschlüssigen Verbindung des hinteren Rahmenteils mit einem Zugfahrzeug,
- eine am Fahrzeuganhänger auf der gegenüberliegenden Seite der Befestigungsvorrichtung angeordnete Anhängerkupplung zur mechanischen Verbindung des vorderen Rahmenteils mit einem Zugfahrzeug und
- eine auf dem hinteren Rahmenteil angeordnete beheizbare und verschwenkbare Verteilvorrichtung.

Weiterhin wird diese Aufgabe, gemäß Patentanspruch 13, durch ein Ausbringgerät gelöst, bei dem nach dessen Anlieferung auf der Baustelle bzw. am Einsatzort:
a) der zweiteilige Fahrzeugrahmen auseinandergebaut wird,
b) das vordere Rahmenteil abgestellt wird,
c) das hintere Rahmenteil mit der Befestigungsvorrichtung am Zugfahrzeug befestigt wird und
d) die beheizbare und verschwenkbare Verteilvorrichtung in Betrieb genommen und diese vom Zugfahrzeug gezogen wird.

Das mobile Ausbringgerät und das Betriebsverfahren gemäß der Erfindung weisen den Vorteil auf, dass nur ein Benutzer erforderlich ist, um nach Anlieferung des Ausbringgeräts auf der Baustelle bzw. am Einsatzort dieses mit wenigen Handgriffen auseinander- und an das Zugfahrzeug anzubauen.

In Weiterbildung der Erfindung sind, gemäß Patentanspruch 2, das vordere Rahmenteil und das hintere Rahmenteil als Steckrahmen ausgestaltet.

Diese Weiterbildung der Erfindung weist den Vorteil auf, dass auch ein ungeübter Benutzer eine einfache und schnelle Steckmontage durchführen kann. Das jeweilige Rahmenteil ist U-Förmig ausgestaltet und ist in den Rahmenecken biegesteif. Am Schenkelende kann das jeweilige Rahmenteil als offener Steckrahmen (Rundrohr, Rechteckrohr) ausgestaltet werden, wobei der Rahmenfuß kleiner als die zugehörige Rahmenaufnahme ausgestaltet ist (männliche und weibliche Steckaufnahme.

Bei einer bevorzugten Ausgestaltung der Erfindung weist, gemäß Patentanspruch 3, das hintere Rahmenteil zwei, koaxial im Abstand zueinander angeordnete Einzelräder des Fahrgestells auf und trägt die Verteilvorrichtung.

Diese Ausgestaltung der Erfindung weist den Vorteil auf, dass eine höhere Wendigkeit (kleinerer Wendekreis) erzielbar ist. Um eine ausgewogene Gewichtsverteilung zu erreichen und eine Kopflastigkeit weitgehend zu vermieden sind die schweren Teile des mobilen Ausbringgeräts im Bereich der Einzelräder angeordnet.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- Fig. 1: in Seitenansicht eine Ausgestaltung des Ausbringgeräts gemäß der Erfindung,
- Fig. 2a, 2b: in perspektivischer Ansicht und Seitenansicht das Ausbringgerät nach Fig. 1 zerlegt in vorderes und hinteres Rahmenteil,
- Fig. 3: in perspektivischer Ansicht das Ausbringgerät angebracht an ein Zugfahrzeug,
- Fig. 4: in Seitenansicht die Kombination von Ausbringgerät und Zugfahrzeug nach Fig. 3
- Fig. 5: in Draufsicht das Ausbringgerät nach Fig. 1 mit der Verteilvorrichtung in Randposition,
- Fig. 6: in Draufsicht das Ausbringgerät nach Fig. 1 mit der Verteilvorrichtung in mittleren Bereich positioniert,
- Fig. 7: das hintere Rähmenteil mit zwei einführbaren Zusatzrädern,
- Fig. 8: in Seitenansicht das Ausbringgerät mit einer digitalen Erfassung und Steuerung des gleichmäßigen Austrags des Materials,
- Fig. 9: in perspektiver Ansicht eine weitere Ausgestaltung des hinteren Rahmenteils mit einem hydraulisch absenkbaren Fahrwerk
- Fig. 10: die Ausgestaltung nach Fig. 9 mit einer Höhenverstellung des ersten Schwenkarms
- Fig. 11: in perspektivischer Ansicht und Seitenansicht das hintere Rahmenteil mit einem hydraulischen Fahrwerk und
- Fig. 12: in perspektivischer Ansicht und Seitenansicht das hintere Rahmenteil nach Fig.11 und das vordere Rahmenteil auseinandergebaut.

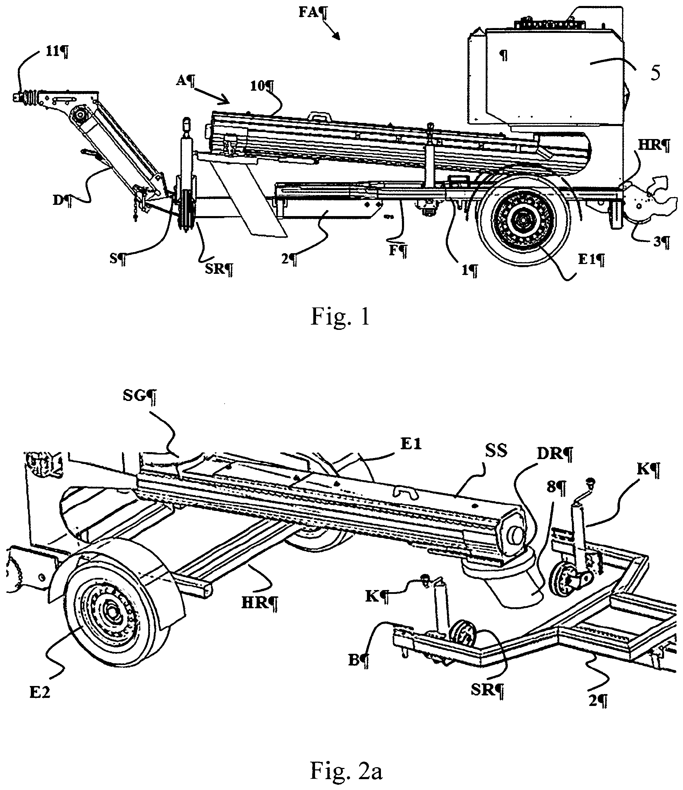

**Fig.** 1 bis Fig. 12 zeigen Ausführungsformen eines Ausbringgeräts A gemäß der Erfindung. Vorzugsweise wird das Ausbringgerät A für Straßenbauarbeiten, insbesondere zum Einbau von Gussasphalt oder Heißasphalt verwendet. Heißasphalt wird typischerweise in stark befahrenen Bereichen wie Autobahnen und Hauptverkehrsstraßen verwendet. Er eignet sich außerdem ideal für warme und trockene Wetterbedingungen. Heißasphalt hat bei der Ankunft auf der Baustelle normalerweise eine Temperatur zwischen 140 °C und 180 °C. Gussasphalt soll beim Einbau eine Temperatur zwischen 220 °C und 240 °C aufweisen. Im Einzelnen weist das Ausbringgerät A einen Fahrzeuganhänger FA, eine Befestigungsvorrichtung 3 und eine Kupplung 11 zur Verbindung mit einem Zugfahrzeug 4 sowie eine auf dem Fahrzeuganhänger FA angeordnete verschwenkbare Verteilvorrichtung 10 auf.

Vorzugsweise ist das Fahrgestell F zweiteilig und in einen vorderen Rahmenteil 2 und einen hinteren Rahmenteil HR zerlegbar. **Fig. 2a** zeigt die formschlüssige Verbindung mittels Steckrahmen (Rahmenrohr RR, insbesondere rechteckig), welche durch Ziehen gelöst werden kann. Um ein Lösen der Verbindung beim Transport zur Baustelle zu verhindern sind beide Rahmenteile 2, HR durch Verbindungselemente, insbesondere Bolzen B oder Stifte gesichert.

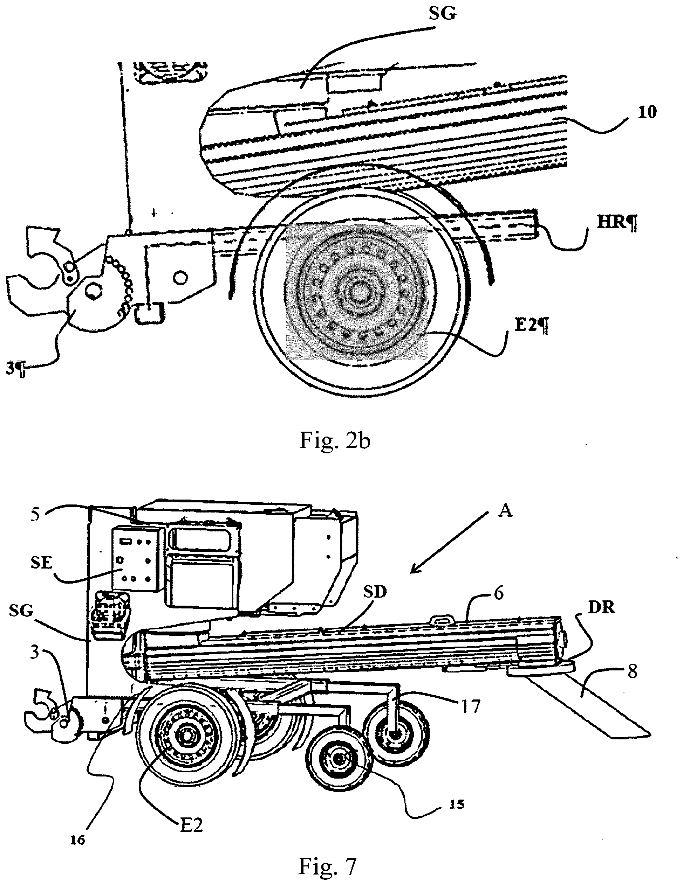

Das hintere Rahmenteil HR weist zwei, koaxial im Abstand zueinander angeordnete Einzelräder E1, E2 des Fahrgestells F auf und trägt die Verteilvorrichtung 10. Das vordere Rahmenteil 2 weist eine Fahrzeugdeichsel D und eine an dieser befestigten Stützeinrichtung S auf. Ähnlich wie bei Starrdeichselanhängern ist die Deichsel D starr mit dem vorderen Rahmenteil 2 verbunden. Da die Stützlast über 50 kg liegt ist die Stützeinrichtung S in der Höhe einstellbar. **Fig. 2a** zeigt eine Stützeinrichtung S mit auf beiden Seiten angeordnete und über eine Kurbel K in der Höhe verstellbare Stützräder SR. Weiterhin weist das vordere Rahmenteil 2 eine Anhängerkupplung 11 auf, welche insbesondere als Zugöse für eine Bolzenkupplung, Maulkupplung oder Kugelkopfkupplung am Zugfahrzeug 4 ausgestaltet ist. Entsprechend aktueller Vorschriften weist der Fahrzeuganhänger FA keine eigene Bremse auf (derzeit bis 750 kg). **Fig. 2b** zeigt im Detail das hintere Rahmenteil HR mit einer Befestigungsvorrichtung 3.

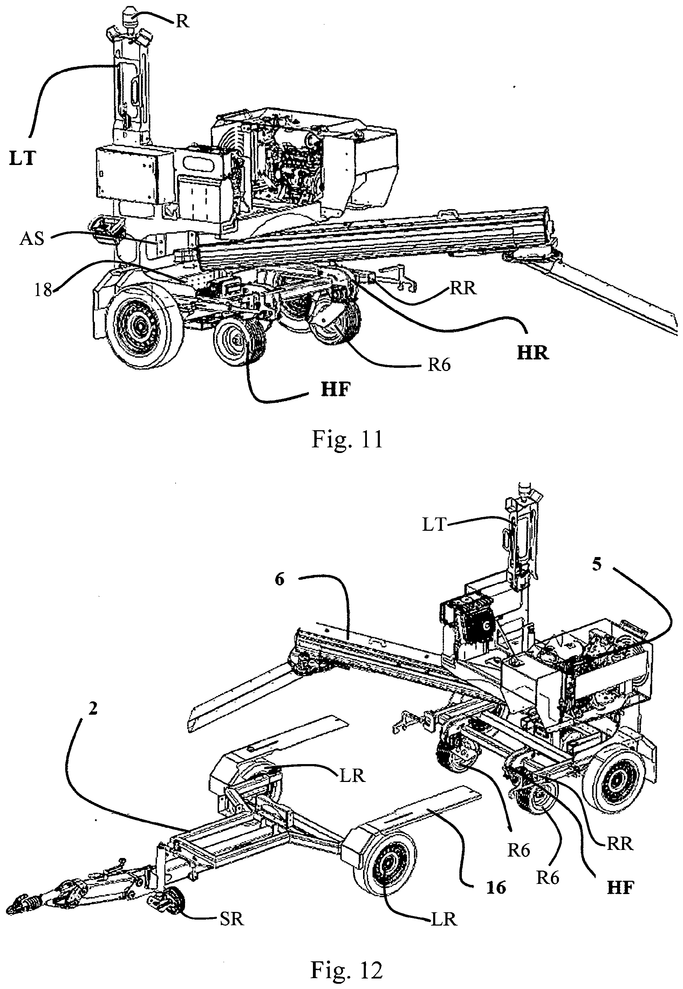

Im Rahmen der Erfindung weist das vordere Rahmenteil 2 ein Stützrad SR und zwei am gegenüberliegenden Ende des vorderen Rahmenteils 2 angeordnete weitere Laufräder LR auf. Zum lenkbaren Verschieben ist das Stützrad SR gelenkig und die weiteren Laufräder mit einer Achse (dreirädriges vorderes Rahmenteil 2) ausgestaltet (siehe **Fig. 12****).**

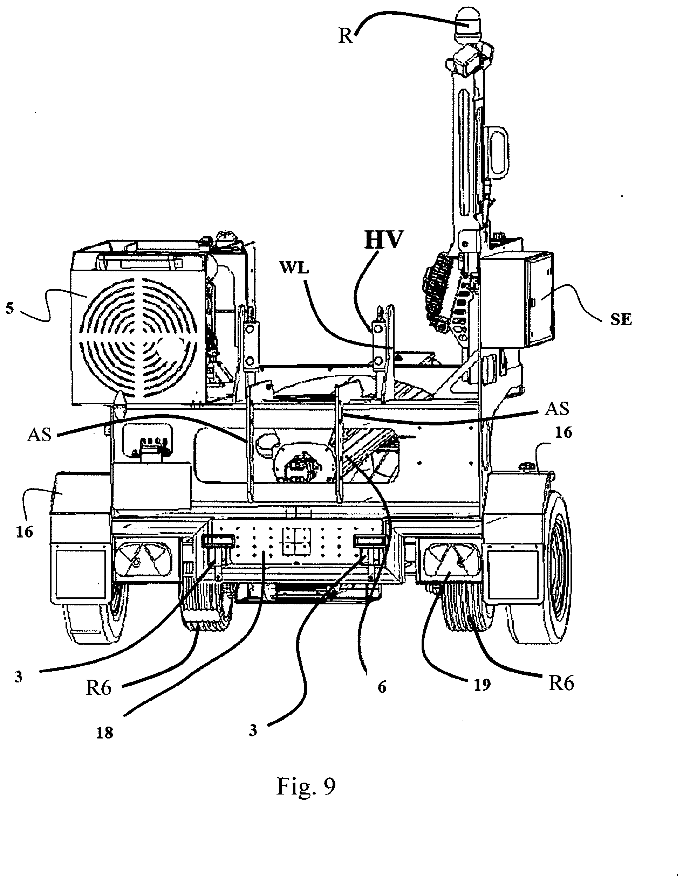

Der hintere Rahmenteil HR weist Schluss-, Brems- und Blinkleuchten sowie mindestens eine Nebelschlussleuchte auf, welche ähnlich zu handelsüblichen Anhängern mit den entsprechenden elektrischen Anschlüssen des Zugfahrzeugs 4 über eine in der Zeichnung nicht dargestellte lösbare Steckverbindung verbunden sind, welche auch Rücklichter 19 (siehe **Fig. 9****)** mit Strom versorgt.

Der hintere Rahmenteil HR der Verteilvorrichtung 10 kann über verschiedene Kupplungspunkte mit dem Beschickungsfahrzeug 4 verbunden werden. Das Beschickungsfahrzeug 4 kann ein LKW oder ein LKW-Anhänger sein, daher muss die Verbindung zum Beschickungsfahrzeug 4 einfach, schnell, sicher, variabel und anpassbar sein.

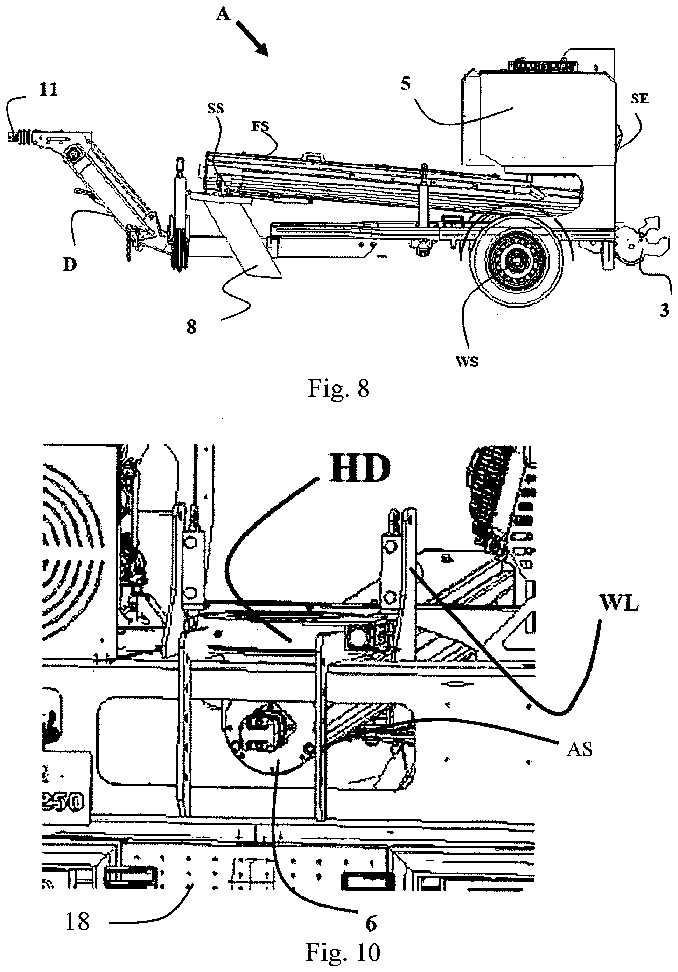

Es gibt verschiedene Möglichkeiten der Befestigungsvorrichtung 3:
(1) In den unteren beiden Führungsrohren des hinteren Rahmenteils HR wird der Abstand zum Beschickungsfahrzeug 4 mit ausziehbaren Abstandhaltern hergestellt. Dabei dient der Querträger 12 (Unterfahrschutz) des Beschickungsfahrzeuges 4 als Anschlag. Sind die Abstandhalter auf den gewünschten Abstand eingestellt, wird die Verteilvorrichtung 10 mittels Spanngurten oder Spannketten kraftschlüssig mit dem Beschickungsfahrzeug 4 verbunden. Diese Art der Ankopplung ermöglicht die Ankopplung an alle in der EU marktüblichen Unterfahrschutzeinrichtungen/ Querträger 12.
(2) An einer modularen Gewindeplatte 18 an der Rückseite der Verteilvorrichtung 10 können verschiedene Kupplungsgegenstücke für handelsübliche LKW-Kupplungsmäuler angebracht werden. Diese Variante ermöglicht ein einfaches und schnelles Einschieben der Verteilvorrichtung 10 in das Kupplungsmaul des LKWs 4. Das Kupplungsgegenstück an der Verteilvorrichtung 10 ist zusätzlich als Abstandshalter in der Länge verstellbar, um den optimalen Abstand zum Beschickungsfahrzeug 4 herzustellen. Ergänzend können für eine Höhenverstellung ein oder zwei Adapterschienen AS über der modularen Gewindeplatte 18 angeordnet sein (siehe **Fig. 9****,** **Fig.** 10).
(3) Über einen oder mehrere Gelenkarme, die in Länge, Höhe und Breite verstellbar sind, kann der Abstand zum Beschickungsfahrzeug 4 exakt eingestellt werden. Durch eine kraftschlüssige Verbindung zum Beschickungsfahrzeug 4 am Rahmen oder anderen Aufbauten wird die Verteilvorrichtung 10 fixiert.

Alle drei Varianten sind an der Rückseite des hinteren Rahmenteils HR der Verteilvorrichtung 10 angebracht und können bei nichtgebrauch eingeklappt, eingefahren und arretiert oder komplett abgenommen und in einer an der Verteilvorrichtung 10 angebrachten Aufnahme verstaut werden, um allen in der EU geltenden Richtlinien in Bezug auf die nationale Straßenverkehrs-Zulassungs-Ordnung StVzO zu entsprechen.

Die verschwenkbare Verteilvorrichtung 10 ist vorzugsweise im Bereich 2,5m bis 3,0m lang und wird insbesondere mittels Hydraulikmotor 5 verschwenkt. Der Hydraulikmotor 5 dient auch als Transportsicherung, welche zusätzlich mittels mechanischer Sicherung (z.B. Bolzen) verstärkt werden kann.

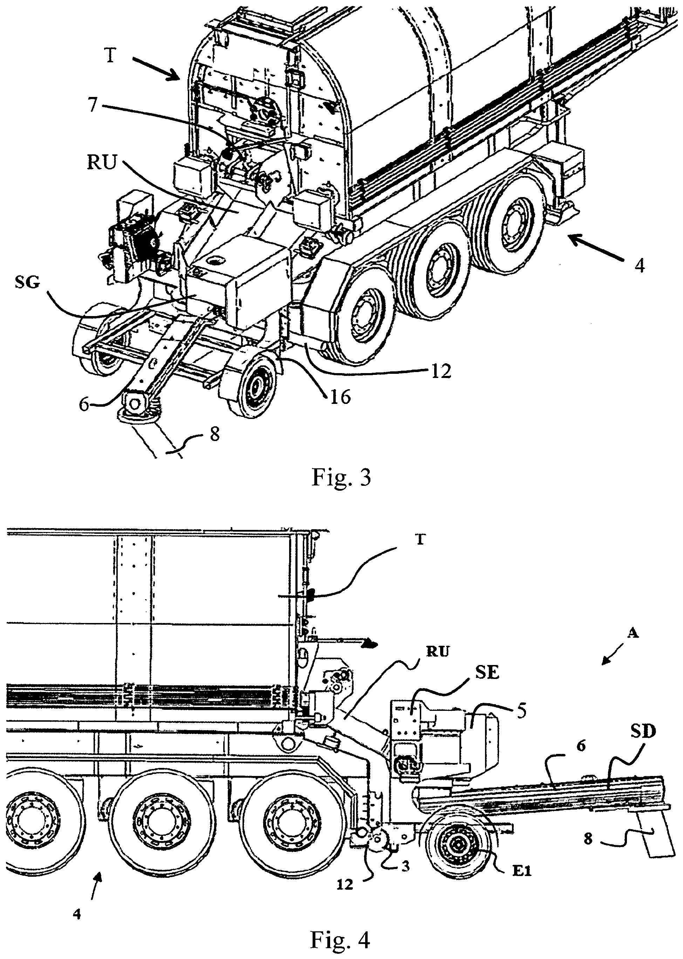

Die Befestigungsvorrichtung 3 am hinteren Rahmenteil HR ist vorzugsweise als schwenkbares, hakenförmiges Kopplungselement ausgestaltet (siehe **Fig. 2****,** **Fig. 7****),** welches an einem Querträger 12 (auch Starrbohle genannt) des Zugfahrzeugs 4 eingreift oder diesen teilweise umschließt. Der Querträger 12 des Zugfahrzeugs 4 hat demnach eine Doppelfunktion, nämlich soll als Unterfahrschutz verhindern, dass bei einem Straßenverkehrsunfall kleinere Fahrzeuge (PKW, Zweiräder) die Aufbauten, Räder oder das Fahrgestell eines größeren Lastkraftwagens oder Anhängers unterfahren und die Verkehrsteilnehmer verletzt oder getötet werden und als Widerlager zur Befestigungsvorrichtung 3 (siehe Fig. 3, Fig. 4). Weiterhin kann aus Gründen der Verkehrssicherheit zusätzlich ein Kettenspanner (in der Zeichnung nicht dargestellt) vorgesehen werden, da im Betrieb des Ausbringgeräts A das Zugfahrzeug 4 fährt.

Die Verteilvorrichtung 10 (auch Gussasphaltverteiler genannt) weist einen ersten und einen zweiten Schwenkarm 6, 8 auf. Im Betrieb des Ausbringgeräts A steht der erste Schwenkarm 6 über eine Rutsche RU (auch Schurre, Übergaberinne genannt) mit dem Auslass 7 eines auf dem Zugfahrzeug 4 angeordneten Thermobehälters T (auch Thermomulde, Thermocontainer, Gussasphaltkocher) in Verbindung, siehe Fig. 4.

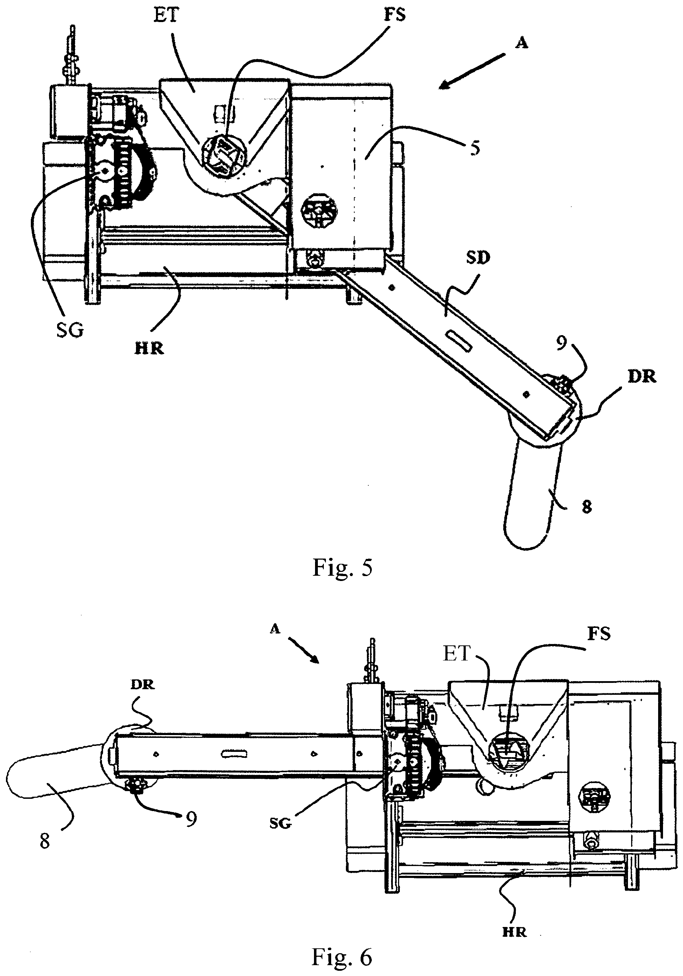

Ein Verschlusssystem (in der Zeichnung nicht dargestellt) des Thermobehälters T ist als ein über einen Kniehebel betätigbarer Ausschüttschieber ausgestaltet und seitlich neben dem Auslass 7 ist mindestens ein im Betrieb ausschwenkbarer Seitenschutz angeordnet. Um ein Verklumpen zu vermeiden und die Fließgeschwindigkeit bei zähem Material, wie Heißasphalt, zu erhöhen, kann bei der Abförderung eine Vibrationserzeugung mittels der Schurre RU (vibrierende Schurre) oder Förderband (vibrierendes Band durch unrunde Welle) vorgesehen sein. Das Ausbringgerät A weist eine trichterförmige Aufnahme (Einfülltrichter ET) auf, welche den offenen Förderbereich der Schurre RU umschließt. Vorzugsweise ist der erste Schwenkarm 6 beheizt und hydraulisch schwenkbar mit einem Schwenkradius von 180° links und rechts. Wie beispielsweise Fig. 3 zeigt ist dessen Position fest unter einem Einfülltrichter ET (siehe Fig. 5, Fig. 6) angeordnet und ähnlich einem Kran drehbar. Um eine gleichmäßige Erwärmung beim kontinuierlichen Austrag mittels Schneckenförderer zu gewährleisten kann dieser bis in den Einfülltrichter ET hineinreichen und sorgt so auch für eine kontinuierliche Durchmischung des Schüttguts / heißen Asphalts.

Der erste Schwenkarm 6 weist an einem Ende ein Schwenkgelenk SG und am anderen Ende ein Drehgelenk DR und einen Verschlussschieber 9 auf.

Vorzugsweise weist der mittels Drehgelenk DR drehbare und in einem Winkel zum ersten Schwenkarm 6 stehende zweite Schwenkarm 8 (auch Auslaufrüssel genannt) eine kleinere Länge in Erstreckungsrichtung auf. Der zweite Schwenkarm 8 kann ebenfalls mit einer Förderschnecke FS ausgestattet sein. Zwischen den einzelnen Schneckentrieben der Schneckenförderer können Trichterbleche und auch elektrisch oder gasbetriebene Heizeinrichtungen angebracht werden, um Anhaftungen zu vermeiden. Für Service und Reparatur sind am oberen Ende des Schneckenförderers ein Deckel (Schneckendeckel SD, siehe Fig. 2a, Fig. 5, Fig. 6) und am oberen Ende des zweiten Schwenkarms 8 ein klappbarer Deckel vorgesehen.

Vorzugsweise ist der zweite Schwenkarm 8 in seiner Länge verstellbar. Dabei werden stufenförmig sich verjüngende Abschnitte (Segmente) teleskopartig ineinandergeschoben, wobei im Betrieb - in Ausflussrichtung gesehen - der umfangmäßig größte Abschnitt dicht über der zu asphaltierenden Oberfläche liegt. Die Funktion teleskopieren wird in der Regel manuell ausgeführt, alternativ kann dies auch (mit entsprechendem Mehraufwand) hydraulisch erfolgen.

Beim Baustelleneinsatz werden die Zusatzräder 15 abgeklappt (abklappen in der Zeichnung nicht dargestellt) oder in die Aufnahme des hinteren Rahmenteils eingesteckt (L-förmiger Träger 17, siehe **Fig. 7****)** und gesichert (insbesondere mittels Bolzen), was einen sicheren Stand des Ausbringgeräts A unabhängig vom zum koppelnden Zugfahrzeug 4 gewährleistet.

Weiterhin sind klapp- bzw. schiebbare Schutzbleche 16 über den Einzelrädern E1, E2 (siehe Fig. 2aund **Fig. 7****)** vorgesehen, was ein Schwenken des ersten Schwenkarms 6 auf 180° links und rechts ermöglicht.

Bei einer im Rahmen der Erfindung liegenden Ausgestaltung des Ausbringgeräts A mit einem hydraulisch absenkbaren Fahrwerk HF (siehe Fig 9, Fig. 11, Fig. 12) am hinteren Rahmenteil HR anstelle der zwei Zusatzräder 15 kann die Schutzabdeckung 16 der Räder verschoben werden, so dass diese entweder am hinteren Rahmenteil HR selbst oder am getrennten vorderen Rahmenteil 2 verbleiben (siehe Fig. 12). Die Schutzabdeckungen 16 können auf der Baustelle auch ganz entfernt werden (siehe Fig. 9).

Weist - wie in **Fig. 9** und **Fig. 10** dargestellt - der erste Schwenkarm 6 einen hydraulischen Zylinder HV oder eine Spindel auf, so kann ebenfalls ein Schwenken des ersten Schwenkarms 6 auf 180° links und rechts ermöglicht werden. Der Zylinder HV ist an einer sich senkrecht zum Fahrzeugrahmen 1 erhebenden Widerlager WL befestigt und die Kolbenstange drückt (Linearbewegung eines einfach wirkenden Hydraulikzylinders) den Schwenkarm 6 nach oben. Die Bewegung in zwei Wirkrichtungen kann durch einen doppelt wirkenden Hydraulikzylinder HV oder eine elektrische Spindel erreicht werden. Aus Kostengründen kann alternativ die Höhenverstellung auch manuell erfolgen. Das Widerlager WL dient zur Befestigung der Hebezylinder HV oder Mechanik für das Anheben des ersten Schwenkarms 6. Dies dient zur optimalen Anpassung an die Auslaufhöhe des Beschickerfahrzeugs 4. Insbesondere dient die einstellbare, ablesbare Höhendifferenz HD zur optimalen Anpassung an die Schurre des LKW's oder Anhängers 4, um eine möglichst kurze Übergabestrecke zu gewährleisten, so dass der Wärmeverlust im Material so gering wie möglich ist.

Zusammenfassend lässt sich das erfindungsgemäße Betriebsverfahren des Ausbringgeräts A nach dessen Anlieferung auf der Baustelle bzw. am Einsatzort wie folgt beschreiben:
a) der zweiteilige Fahrzeugrahmen 1 wird auseinandergebaut,
b) das vordere Rahmenteil 2 wird abgestellt,
c) das hintere Rahmenteil HR wird mit der Befestigungsvorrichtung 3 am Zugfahrzeug 4 befestigt und
d) die beheizbare und verschwenkbare Verteilvorrichtung 10 wird in Betrieb genommen und diese vom Zugfahrzeug 4 gezogen.

Um einen sicheren Betrieb zu gewährleisten (Standsicherheit) sind im Arbeitsschritt: b1) am hinteren Rahmenteil HR zwei Zusatzräder 15 befestigbar oder ausklappbar (siehe **Fig. 7****).**

Im Rahmen der Erfindung weist das hintere Rahmenteil HR anstelle der zwei Zusatzräder 15 ein hydraulisch absenkbares Fahrwerk HD auf (sicherer Stand des Ausbringgeräts A unabhängig vom zum koppelnden Zugfahrzeug 4), siehe **Fig. 11, Fig. 12****.** Das Fahrwerk HD besteht aus mindesten einem absenkbaren hydraulisch oder elektrisch oder mechanisch absenkbaren Rad R6 das durch eine mit Steckbolzen oder über eine mechanische oder eine sensorgestützte Verriegelung auf eine dem Arbeitsprozess angepasste Höhe eingestellt werden kann. Durch das Absenken des oder der Räder R6 und die individuelle Einstellung der Höhe wird hintere Rahmenteil HR in seinem gesamten Umfang zum Einsatz an verschiedenste Beschickerfahrzeugen/Zugfahrzeug 4, z.B. LKW oder Anhänger, vorbereitet. Nach dem Trennen des zweiteiligen Fahrzeugrahmens 1 wird das vordere Rahmenteil 2 vom Einsatzort weggeschoben.

Vorzugsweise dient der mobile und adaptierbare Gussasphaltverteiler 10 dabei zum Verteilen des heißen Gussasphalts oder Asphalts auf der Baustelle. Der steckbare Fahrzeugrahmen 1 wird nach der Anlieferung des Gussasphaltverteilers 10 auf der Baustelle bzw. am Einsatzort mit wenigen Handgriffen auseinandergebaut.

Der vordere Steckrahmen 2 mit der Fahrzeugdeichsel D wird abgestellt und der Gussasphaltverteiler 10 kann über eine anpassbare und verstellbare Klemmvorrichtung 3 an verschiedene LKW oder LKW-Anhängern 4 angebaut werden. Nach der Verbindung des Gussasphaltverteilers 10 mit dem LKW/ Anhänger 4 wird der Gussasphaltverteiler 10 durch den LKW/ Anhänger 4 bewegt bzw. gezogen.

Nach Entleerung des Thermobehälters T (auch Gussasphaltkocher genannt) kann der Gussasphaltverteiler 10 mit wenigen Handgriffen an den nächsten LKW/ Anhänger 4 umgebaut werden.

Bei einem hydraulisch absenkbaren Fahrwerk HD wird am Arbeitsende das vordere Rahmenteil 2 wieder in Position vor dem hinteren Rahmenteil HR gebracht und über eine mechanische oder hydraulische Zugeinrichtung sowie zusätzlich mit Steckbolzen Rahmen in Rahmen wieder starr mit dem hintere Rahmenteil HR verbunden.

Nach diesem Arbeitsschritt wird das Stützfahrwerk (absenkbares Fahrwerk) wieder hochgefahren und arretiert und in Wirkeingriff mit dem nächsten LKW/ Anhänger 4 gebracht werden. Nach dem Zusammenbau ist das Ausbringgerät A wieder im Straßenverkehr einsetzbar.

Der Gussasphaltverteiler 10 verfügt über eine eigene Energieversorgung durch einen Benzin/Diesel Motor oder E- Akkuantrieb 5. Über diese Energieversorgung werden die Hydraulik und die Stromversorgung der Heizelemente betrieben.

Nach dem Anbringen des Gussasphaltverteilers 10 kann über einen beheizten hydraulisch schwenkbaren ersten Förderschneckenarm 6 mit einem Schwenkradius von 180° Links und Rechts der Gussasphalt gefördert werden. Hierzu wird aus dem Gussasphaltkocher T über die Öffnung des Kesselschiebers der Gussasphalt in den Gussasphaltverteiler 10 eingeleitet. Im Bereich des Einfülltrichters ET (siehe **Fig. 5, Fig. 6****)** kann ein Thermometer, insbesondere ein Infrarot-Thermometer zur berührungslosen Asphalttemperaturmessung angeordnet sein.

Am Ende des ersten Förderarmes 6 befindet sich ein zweiter beheizter und hydraulisch drehbarer Schwenkarm 8, der um 360° drehbar ist. Dieser zweite Schwenkarm 8 kann ebenfalls mit einer Förderschnecke FS ausgestattet sein oder ohne sowie mit einem über die Fernbedienung steuerbaren Verschlussschieber 9. Die Entlademenge oder Entladegeschwindigkeit kann kontrolliert gesteuert werden, insbesondere wird über die Fernbedienung die Drehzahl der Förderschnecke FS im Förderschneckenarm 6 und/oder Schwenkarm 8 geregelt.

Dieser zweite Schwenkarm 8 ist mit Steckverbinder wechselbar und kann in Länge, Form und Ausstattung (Schnecke, Stator-Rotor, Förderband) angepasst werden. Durch die geringe Länge des zweiten Schwenkarmes 8 kann eine schnelle Anpassung am Ausbringort des Gussasphaltverteilers vorgenommen werden.

Beide Arme 6, 8 sind elektrisch regelbar beheizt und werden über eine Funkfernsteuerung bedient. Dies ermöglicht dem Bediener zum einen direkt an der Ausgabestelle des Gussasphaltverteilers 10 die Menge und den Ausbringungsort zu steuern und entfernt zum anderen den Bediener aus dem Emissionsbereich der Gussasphaltdämpfe. Wie insbesondere **Fig. 8** zeigt, wird mit einem vorzugsweise am ersten Förderarm 6 angeordneten Sensor **SS** die Menge des Gussasphalts (Asphalt / Beton) in der trichterförmigen Aufnahme/ des Einfülltrichters ET (siehe **Fig. 5, Fig. 6****)** digital erfasst und an eine Steuereinheit SE übergeben. Weiterhin wird mittels eines Wegesensors WS die Fahrgeschwindigkeit des Fahrzeuganhängers FA gemessen und anhand dieser gemessenen Fahrgeschwindigkeit wird von der Steuereinheit SE die Drehzahl der jeweiligen Förderschnecke FS im Ausbringgerät A gesteuert. Ebenfalls von der Steuereinrichtung SE gesteuert wird die Temperatur der Heizelemente (in Abhängigkeit von der mittels Thermometer, insbesondere einem Infrarot-Thermometer gemessenen Temperatur). Über diese digitale Aufarbeitung kann das Material Ressourcenschonend verarbeitet werden und es wird ein gleichmäßiger Austrag des Materials durch den Gussasphaltverteiler 10 ermöglicht.

Nach der Förderung mittels der jeweiligen Förderschnecke FS im Ausbringgerät A wird der Gussasphalt über den beheizten oder unbeheizten, isolierten Auslaufrüssel 8 auf die Oberfläche aufgebracht.

Durch die Rotationsmöglichkeit des Auslaufrüssels 8 um 360° wird eine extrem schnelle und flexible Ausbringung des Materials erreicht. Auch an schwierigen Stellen ist eine exakte Dosierung möglich. Auch der Seitenwechsel des Streugutes wird durch das Schwenken nur eines Auslegerarmes (Schwenkarm 6) zeitlich stark verkürzt.

Durch die Möglichkeit der Längenverstellung des Auslaufrüssels 8 wird das Material zudem extrem oberflächennah ausgebracht, was einem möglichen Wärmeverlust des Gussasphalts entgegenwirkt und insgesamt ist die Streufläche sowohl in der Streubreite (erster Schwenkarm 6) als auch in der Streuhöhe (zweiter Schwenkarm 8) steuerbar. Dabei sind beispielsweise zwei Drehknöpfe an einer Fernbedienung (welche mit der Steuereinrichtung SE in Funkverbindung steht) vorgesehen, so dass beispielsweise im Randbereich oder unregelmäßig geformter Fläche die Drehung und/oder Höhenverstellung des Auslaufrüssels 8 per Funkfernsteuerung eingestellt bis deaktiviert werden kann. Mittels zwei Personen wird die Ausbringung aus dem Thermobehälter T (Thermomulde, Thermocontainer, Gussasphaltkocher) und aus dem Gussasphaltverteiler 10 gesteuert, während eine dritte Person das Streugut/hier Heißasphalt glattzieht. Im Rahmen der Erfindung kann für beide Ausbringsteuerungen eine einzige Fernbedienung vorgesehen werden, wofür eine gemeinsame Schnittstelle und Empfänger an beiden Fernbedienungen vorgesehen ist.

Zusammenfassend sind die technischen Daten eines Ausbringeräts A gemäß der Erfindung beispielsweise: Antrieb 5 als Dieselmotor, schallgekapselt, wassergekühlt; Hydraulik als Proportionalhydraulik mit Verstellpumpe; Länge des Ausbringgeräts A im Betrieb ca. 1,5m, Breite im Betrieb (ohne Schwenkarm 6 ca. 2,2m, Höhe im Betrieb ca. 2,7m (nachts Beleuchtung Lichterturm LT + gelbe oder orangefarbene Rundumleuchte R, verstellbar auf ca. 1,5m), Arbeitsradius ca. 3m; Generator ca. 4 kVa; Steuerung SE Funkfernbedienung; 2t Fahrzeuganhänger FA mit zwei Kupplungen, nämlich Fahrzeugdeichsel D und gegenüberliegende Befestigungsvorrichtung 3, zulässige Geschwindigkeit des Ausbringgeräts A 80 km/h, Fahrgestell-/Fahrzeugrahmenlänge ca. 5,2m, Fahrgestellbreite ca. 2,2m, Fahrgestellhöhe ca. 1,7m, Zulässige Gesamtmasse 2.000kg, höhenverstellbare Fahrzeugdeichsel D, verzinkter Fahrgestellrahmen 1, hochwertige Verschleißbleche; hydraulische Förderschnecke FS, Schneckendurchmesser 170mm, geeignet für Steine bis 25mm, Förderarmlänge des 1. Schwenkarms 6 ca. 2,5m, elektrische Beheizung, Förderleistung bis zu 30 t/h, Schneckendrehzahl stufenlos einstellbar; Breite des Einfülltrichters ET ca. 0,56m, Höhe des Einfülltrichters ET 1,2m.

Die Erfindung ist nicht auf die dargestellten und beschriebenen Ausführungsbeispiele beschränkt, sondern umfasst auch alle im Sinne der Erfindung gleichwirkenden Ausführungen des erfindungsgemäßen mobilen Ausbringgeräts A, d.h. die Erfindung ist nur durch die Patentansprüche beschränkt.

### Bezugszeichenliste:

- 1: Fahrzeugrahmen (steckbar, zweiteilig)
- 2: vorderes Rahmenteil (mit Fahrzeugdeichsel D)
- 3: Befestigungsvorrichtung (Klemmvorrichtung, anpassbar und verstellbar)
- 4: Zugfahrzeug (LKW, Anhänger)
- 5: Antrieb (Benzin/Diesel Motor oder E- Akkuantrieb)
- 6: 1. Schwenkarm (beheizt, hydraulisch drehbar, wechselbar)
- 7: Auslass (Thermobehälter, Thermomulde, Thermocontainer,)
- 8: 2. Schwenkarm (Auslaufrüssel beheizt, hydraulisch schwenkbar)
- 9: Verschlussschieber (von 6)
- 10: Verteilvorrichtung (Gussasphaltverteiler, getragen vom Fahrzeugrahmen 1)
- 11: Anhängerkupplung
- 12: Querträger (Starrbohle, hinterer Unterfahrschutz vom Zugfahrzeug)
- 15: Zusatzrad (schiebbar)
- 16: Schutzblech (klapp- oder einsteckbar)
- 17: L-förmiger Träger (für Zusatzrad 15)
- 18: Gewindeplatte / Modulplatte
- 19: Rücklichter
- A: Ausbringgerät
- AS: Adapterschiene
- B: Bolzen (Transportsicherung)
- D: Fahrzeugdeichsel (am vorderen Rahmenteil 2)
- DR: Drehgelenk (zwischen 1. und 2. Schwenkarm)
- E1, E2: Einzelräder
- F: Fahrgestell
- FA: Fahrzeuganhänger
- FS: Förderschnecke
- HD: Höhendifferenz (mittels HV)
- HF: Hydraulisches Fahrwerk
- HR: hinteres Rahmenteil (steckbar)
- HV: hydraulischer Zylinder (Höhenverstellung für 1. Schwenkarm 6)
- LR: Laufrad
- LT: Lichterturm
- K: Kurbel
- R: Rundumléuchte (Warnleuchte)
- RR: Rahmenrohr
- RU: Rutsche
- S: Stützeinrichtung (Anhängerstützrad an der Fahrzeugdeichsel D)
- SD: Schneckendeckel
- SE: Steuereinrichtung
- SR: Stützrad
- SS: Sensor (Fördermenge)
- SRG: Schwenkgelenk
- T: Thermobehälter (Thermomulde, Thermocontainer, Gussasphaltkocher
- WS: Wegesensor
- ET: Einfülltrichter
- WL: Widerlager Hebemechanismus

## Patentansprüche

1. Ausbringgerät (A), welches aufweist:
• einen Fahrzeuganhänger (FA), welcher ein Fahrgestell (F) mit einem zweiteiligen Fahrzeugrahmen (1) aus einem vorderen Rahmenteil (2) und einem hinterem Rahmenteil (HR) aufweist,
• eine Befestigungsvorrichtung (3) zur kraft- oder formschlüssigen Verbindung des hinteren Rahmenteils (HR) mit einem Zugfahrzeug (4),
• eine am Fahrzeuganhänger (FA) auf der gegenüberliegenden Seite der Befestigungsvorrichtung (3) angeordnete Anhängerkupplung (11) zur mechanischen Verbindung des vorderen Rahmenteils (2) mit einem Zugfahrzeug (4) und
• eine auf dem hinteren Rahmenteil (HR) angeordnete beheizbare und verschwenkbare Verteilvorrichtung (10).

2. Ausbringgerät (A) nach Anspruch 1, wobei das vordere Rahmenteil (2) und das hintere Rahmenteil (HR) als Steckrahmen ausgestaltet sind.

3. Ausbringgerät (A) nach einem oder mehreren der Ansprüche 1 bis 2, wobei das hintere Rahmenteil (HR) zwei, koaxial im Abstand zueinander angeordnete Einzelräder (E1, E2) des Fahrgestells (F) aufweist und die Verteilvorrichtung (10) trägt.

4. Ausbringgerät (A) nach einem oder mehreren der Ansprüche 1 bis 3, wobei das vordere Rahmenteil (2) eine Fahrzeugdeichsel (D) mit der Anhängerkupplung (11) und eine an der Fahrzeugdeichsel (D) befestigte Stützeinrichtung (S) aufweist.

5. Ausbringgerät (A) nach einem oder mehreren der Ansprüche 1 bis 4, wobei die Befestigungsvorrichtung (3) als schwenkbares, flexibles Kopplungselement ausgestaltet ist, welches an einem Querträger (12) des Zugfahrzeugs (4) eingreift oder diesen teilweise umschließt.

6. Ausbringgerät (A) nach einem oder mehreren der Ansprüche 1 bis 5, wobei die Verteilvorrichtung (10) einen ersten und einen zweiten Schwenkarm (6, 8) aufweist und dass im Betrieb der erste Schwenkarm (6) über eine Rutsche (RU) mit dem Auslass (7) eines auf dem Zugfahrzeug (4) angeordneten Thermobehälters oder Asphalt-/Gussasphaltkocher (T) in Verbindung steht.

7. Ausbringgerät (A) nach Anspruch 1, wobei der erste Schwenkarm (6) an einem Ende ein Schwenkgelenk (SG) und am anderen Ende ein Drehgelenk (DR) und einen Verschlussschieber (9) aufweist und der mittels Drehgelenk (DR) drehbare und in einem Winkel zum ersten Schwenkarm (6) stehende zweite Schwenkarm (8) eine kleinere Länge in Erstreckungsrichtung als der erste Schwenkarm (6) aufweist.

8. Ausbringgerät (A) nach Anspruch 7, wobei der zweite Schwenkarm (8) in seiner Länge verstellbar ist.

9. Ausbringgerät (A) nach einem oder mehreren der Ansprüche 6 bis 8, wobei dieses eine eigene Energieversorgung durch einen Benzin-/Diesel-Motor oder E- Akkuantrieb (5) aufweist und mittels einer frei konfigurierbaren Funkfernsteuerung beide Schwenkarme (6, 8) fernbedienbar sind.

10. Ausbringgerät (A) nach einem oder mehreren der Ansprüche 1 bis 9, wobei in das hintere Rahmenteil (HR) zwei Zusatzräder (15) oder ein hydraulisch absenkbares Fahrwerk (HD) einsteckbar sind.

11. Ausbringgerät (A) nach Anspruch 3, wobei über den Einzelrädern (E1, E2) klapp- oder schwenkbare Schutzbleche (16) angeordnet sind.

12. Ausbringgerät (A) nach einem oder mehreren der Ansprüche 6 bis 11, wobei der erste Schwenkarm (6) einen hydraulischen Zylinder (HV) oder eine Spindel aufweist.

13. Betriebsverfahren für ein Ausbringgerät (A) nach Anspruch 1, bei dem nach dessen Anlieferung auf der Baustelle bzw. am Einsatzort:
a) der zweiteilige Fahrzeugrahmen (1) auseinandergebaut wird,
b) das vordere Rahmenteil (2) abgestellt wird,
c) das hintere Rahmenteil (HR) mit der Befestigungsvorrichtung (3) am Zugfahrzeug (4) befestigt wird und
d) die beheizbare und verschwenkbare Verteilvorrichtung (10) in Betrieb genommen und diese vom Zugfahrzeug (4) gezogen wird.

14. Betriebsverfahren nach Anspruch 13, bei dem im Arbeitsschritt:
b1) am hinteren Rahmenteil (HR) zwei Zusatzräder (15) oder ein hydraulisch absenkbares Fahrwerk (HD) befestigbar oder ausklappbar sind.

15. Betriebsverfahren nach Anspruch 13, bei dem im Arbeitsschritt:
c1) am hinteren Rahmenteil (HR) über Einzelrädern (E1, E2) angeordnete Schutzbleche (16) weggeklappt oder verschwenkt werden oder die verschwenkbare Verteilvorrichtung (10) in der Höhe verstellbar ist.

## Claims

1. Dispensing device (A), comprising:
• a vehicle trailer (FA) having a chassis (F) with a two-part vehicle frame (1) consisting of a front frame part (2) and a rear frame part (HR),
• a fastening device (3) for the force-locking or form-fitting connection of the rear frame part (HR) to a towing vehicle (4),
• a trailer coupling (11) arranged on the vehicle trailer (FA) on the side opposite of the fastening device (3) for the mechanical connection of the front frame part (2) to a towing vehicle (4), and
• a heatable and pivotable distribution device (10) arranged on the rear frame part (HR).

2. Dispensing device (A) according to claim 1, wherein the front frame part (2) and the rear frame part (HR) are configured as plug-in frames.

3. Dispensing device (A) according to one or more of claims 1 to 2, wherein the rear frame part (HR) comprises two individual wheels (E1, E2) of the chassis (F) arranged coaxially at a distance from one another and carries the distribution device (10).

4. Dispensing device (A) according to one or more of claims 1 to 3, wherein the front frame part (2) comprises a vehicle drawbar (D) with the trailer coupling (11) and a support device (S) attached to the vehicle drawbar (D).

5. Dispensing device (A) according to one or more of claims 1 to 4, wherein the fastening device (3) is configured as a pivotable, flexible coupling element that engages with or partially encloses a crossmember (12) of the towing vehicle (4).

6. Dispensing device (A) according to one or more of claims 1 to 5, wherein the distribution device (10) comprises a first and a second pivot arm (6, 8), and wherein, during operation, the first pivot arm (6) is connected via a chute (RU) to the outlet (7) of a thermal container or asphalt/mastic asphalt cooker (T) arranged on the towing vehicle (4).

7. Dispensing device (A) according to claim 1, wherein the first pivot arm (6) has a pivot joint (SG) at one end and a rotary joint (DR) and a closing slide (9) at the other end, and the second pivot arm (8) - which is rotatable by means of the rotary joint (DR) and positioned at an angle to the first pivot arm (6) - has a shorter length in the direction of extension than the first pivot arm (6).

8. Dispensing device (A) according to claim 7, wherein the second pivot arm (8) is adjustable in length.

9. Dispensing device (A) according to one or more of claims 6 to 8, wherein said device has its own power supply via a petrol/diesel engine or electric battery drive (5), and both pivot arms (6, 8) can be remotely controlled by means of a freely configurable radio remote control.

10. Dispensing device (A) according to one or more of claims 1 to 9, wherein two additional wheels (15) or a hydraulically lowerable undercarriage (HD) can be inserted into the rear frame part (HR).

11. Dispensing device (A) according to claim 3, wherein foldable or pivotable guards (16) are arranged above the individual wheels (E1, E2).

12. Dispensing device (A) according to one or more of claims 6 to 11, wherein the first pivot arm (6) comprises a hydraulic cylinder (HV) or a spindle.

13. Operating method for a dispensing device (A) according to claim 1, wherein, after its delivery to the construction site or place of use:
a) the two-part vehicle frame (1) is disassembled,
b) the front frame part (2) is set down,
c) the rear frame part (HR) is attached to the towing vehicle (4) using the attachment device (3), and
d) the heatable and pivotable distribution device (10) is put into operation and is towed by the towing vehicle (4).

14. Operating method according to claim 13, wherein in step:
b1) two auxiliary wheels (15) or a hydraulically lowerable undercarriage (HD) can be attached to or folded out from the rear frame part (HR).

15. Operating method according to claim 13, wherein in step:
c1) mudguards (16) arranged above individual wheels (E1, E2) on the rear frame part (HR) are folded away or pivoted, or the pivotable distribution device (10) is height-adjustable.

## Revendications

1. Dispositif d'épandage (A), comprenant :
• une remorque (FA) présentant un châssis (F) doté d'un cadre de véhicule en deux parties (1) composé d'une partie avant du châssis (2) et d'une partie arrière du châssis (HR),
• un dispositif de fixation (3) pour relier la partie arrière du châssis (HR) à un véhicule tracteur (4) par liaison de force ou de forme,
• un attelage (11) disposé sur la remorque (FA), du côté opposé au dispositif de fixation (3), pour relier mécaniquement la partie avant du châssis (2) à un véhicule tracteur (4), et
• un dispositif de distribution (10), chauffant et orientable, disposé sur la partie arrière du châssis (HR).

2. Dispositif d'épandage (A) selon la revendication 1, dans lequel la partie de châssis avant (2) et la partie de châssis arrière du châssis (HR) sont conçues sous forme de châssis emboîtables.

3. Dispositif d'épandage (A) selon l'une ou plusieurs des revendications 1 à 2, dans lequel la partie de châssis arrière (HR) comporte deux roues individuelles (E1, E2) du train de roulement (F), disposées de manière coaxiale et espacées l'une de l'autre, et porte le dispositif de distribution (10).

4. Dispositif d'épandage (A) selon l'une ou plusieurs des revendications 1 à 3, dans lequel la partie avant du châssis (2) comprend un timon (D) muni du dispositif d'attelage (11) et un dispositif de support (S) fixé au timon (D).

5. Dispositif d'épandage (A) selon l'une ou plusieurs des revendications 1 à 4, dans lequel le dispositif de fixation (3) est conçu sous la forme d'un élément de liaison flexible et pivotant qui s'engage sur une traverse (12) du véhicule tracteur (4) ou entoure partiellement celle-ci.

6. Dispositif d'épandage (A) selon l'une ou plusieurs des revendications 1 à 5, dans lequel le dispositif de distribution (10) présente un premier et un second bras pivotant (6, 8) et dans lequel, en fonctionnement, le premier bras pivotant (6) est relié, par l'intermédiaire d'une goulotte (RU), à la sortie (7) d'un conteneur thermique ou d'un appareil de chauffage pour asphalte/asphalte coulé (T) disposé sur le véhicule tracteur (4).

7. Dispositif d'épandage (A) selon la revendication 1, dans lequel le premier bras pivotant (6) présente, à une extrémité, une articulation de pivotement (SG) et, à l'autre extrémité, une articulation rotative (DR) ainsi qu'un tiroir de fermeture (9), et dans lequel le second bras pivotant (8), orienté selon un angle par rapport au premier bras pivotant (6) et pouvant pivoter au moyen d'une articulation rotative (DR), présente une longueur inférieure, dans le sens de son extension, à celle du premier bras pivotant (6).

8. Dispositif d'épandage (A) selon la revendication 7, dans lequel le second bras pivotant (8) est réglable en longueur.

9. Dispositif d'épandage (A) selon l'une ou plusieurs des revendications 6 à 8, lequel présente sa propre alimentation en énergie assurée par un moteur à essence ou diesel ou par une motorisation électrique sur batterie (5), et dans lequel les deux bras pivotants (6, 8) peuvent être commandés à distance au moyen d'une radiocommande librement configurable.

10. Dispositif d'épandage (A) selon l'une ou plusieurs des revendications 1 à 9, dans lequel deux roues supplémentaires (15) ou un train de roulement (HD) abaissable hydrauliquement peuvent être insérés dans la partie de châssis arrière (HR).

11. Dispositif d'épandage (A) selon la revendication 3, dans lequel des tôles de protection (16) rabattables ou pivotantes sont disposées au-dessus des roues individuelles (E1, E2).

12. Dispositif d'épandage (A) selon l'une ou plusieurs des revendications 6 à 11, dans lequel le premier bras pivotant (6) comporte un vérin hydraulique (HV) ou une tige filetée.

13. Procédé de mise en œuvre d'un dispositif d'épandage (A) selon la revendication 1, dans lequel, après son arrivée sur le chantier ou sur le lieu d'utilisation :
a) le châssis de véhicule en deux parties (1) est désassemblé,
b) la partie avant du châssis (2) est déposée,
c) la partie arrière du châssis (HR) est fixée au véhicule tracteur (4) au moyen du dispositif de fixation (3), et
d) le dispositif de distribution (10), chauffant et orientable, est mis en service et tracté par le véhicule tracteur (4).

14. Procédé de fonctionnement selon la revendication 13, dans lequel, lors de l'étape de travail :
b1) deux roues supplémentaires (15) ou un train de roulement (HD) abaissable hydrauliquement peuvent être fixés à la partie de châssis arrière (HR) ou déployés depuis celle-ci.

15. Procédé de fonctionnement selon la revendication 13, dans lequel, lors de l'étape de travail :
c1) des garde-boue (16), disposés au-dessus de roues individuelles (E1, E2) sur la partie de châssis arrière (HR), sont rabattus ou pivotés, ou bien le dispositif de répartition pivotant (10) est réglable en hauteur.
